(19) Europäisches Patentamt
European Patent Office
Office européen des brevets

(11) **EP 3 529 891 B1**

## (12) EUROPÄISCHE PATENTSCHRIFT

(45) Veröffentlichungstag und Bekanntmachung des Hinweises auf die Patenterteilung:
**08.12.2021 Patentblatt 2021/49**

(21) Anmeldenummer: **17791565.9**

(22) Anmeldetag: **18.10.2017**

(51) Int Cl.:
**H02P 8/04** (2006.01)

(86) Internationale Anmeldenummer:
**PCT/DE2017/100900**

(87) Internationale Veröffentlichungsnummer:
**WO 2018/072791 (26.04.2018 Gazette 2018/17)**

(54) **VERFAHREN UND SCHALTUNGSANORDNUNG ZUM ANSTEUERN EINES SCHRITTMOTORS**

METHOD AND CIRCUIT ARRANGEMENT FOR CONTROLLING A STEPPER MOTOR

PROCÉDÉ ET CIRCUIT POUR COMMANDER UN MOTEUR PAS À PAS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2016 DE 102016119874**

(43) Veröffentlichungstag der Anmeldung:
**28.08.2019 Patentblatt 2019/35**

(73) Patentinhaber: **Maxim Integrated Products, Inc.
San Jose, CA 95134 (US)**

(72) Erfinder: **DWERSTEG, Bernhard
25462 Rellingen (DE)**

(74) Vertreter: **Canzler & Bergmeier Patentanwälte
Partnerschaft mbB
Friedrich-Ebert-Straße 84
85055 Ingolstadt (DE)**

(56) Entgegenhaltungen:
**EP-A1- 2 251 972 WO-A1-2015/192831**

- **Anonymous: "Voltage mode stepper motor control Smooth stepper motor driving", , 20. Juni 2016 (2016-06-20), XP055442023, Gefunden im Internet:
URL:http://www.st.com/resource/en/product_presentation/voltage_mode_stepper_motor_control.pdf [gefunden am 2018-01-18]**

**Beschreibung**

Die Erfindung betrifft ein Verfahren und eine Schaltungsanordnung, mit dem/der ein Schrittmotor durch eine adaptive Ansteuerung über einen großen Drehzahlbereich einschließlich eines Stillstandes, in dem der Motor in einer bestimmten Drehstellung elektrisch fixiert wird, sowie entsprechend einem vorgegebenen Motorstromverlauf mit hoher Präzision betrieben werden kann.

Die Erfindung geht aus von einem Verfahren und einer Schaltungsanordnung gemäß der Beschreibung in der WO 2015/192831.

Dieses bekannte Verfahren und die bekannte Schaltungsanordnung zur Durchführung des Verfahrens beinhaltet im Wesentlichen, dass der Motor in einem niedrigen Drehzahlbereich einschließlich eines Stillstandes mit einer Spannungsgesteuerten oder einer Spannungsgeregelten Betriebsart und in einem höheren oder hohen Drehzahlbereich mit einer Stromgeregelten Betriebsart betrieben wird.

Damit wird einerseits das Problem gelöst, dass in der Stromgeregelten Betriebsart bei niedriger Motor-Drehzahl und bei Stillstand des Motors an einer elektrisch festgelegten Position (d.h. in einer bestimmten Drehstellung) kurzzeitige Stromänderungen aufgrund von Regelschwankungen auftreten können, die im hörbaren Frequenzbereich liegen und als störend empfunden werden. Außerdem kann es bei niedrigen Motorströmen in Verbindung mit einer daraus resultierenden, nur sehr kurzen Dauer der eingeprägten Stromfluss-Phasen aufgrund von Einschwingvorgängen und Blankzeiten schwierig sein, den tatsächlich während dieser kurzen Phasen fließenden Spulenstrom zuverlässig zu messen und mit einem momentanen Soll-Spulenstromwert zu vergleichen.

Deshalb wird unterhalb einer vorbestimmten Drehzahl der Motor mit der Spannungsbasierten (d.h. Spannungsgesteuerten oder Spannungsgeregelten) Betriebsart betrieben, bei der der erforderliche Spulenstrom nicht über die Aktivierung und Dauer von Stromflussphasen (d.h. Chopper-Phasen) eingeprägt, sondern mittels einer an die Motorspulen angelegten Spannung erzeugt und durch Veränderung deren Betrages (bzw. von deren Amplitude) und deren Richtung (bzw. Polarität) eingestellt wird.

Diese Spannung kann insbesondere eine PWM-Spannung mit vorzugsweise konstanter Amplitude sein, die mit entsprechender Polarität an die Motorspulen angelegt wird, wobei anstelle der Amplitude das Tastverhältnis der Pulsweiten-Modulation jeweils so gesteuert oder geregelt wird, dass die resultierende effektive Spannung an den Motorspulen jeweils einen Betrag aufweist, der den momentanen Soll-Spulenstromwert fließen lässt.

Um Einflüsse wie z.B. eine Erwärmung der Motorspulen und eine dadurch verursachte Erhöhung des Innenwiderstandes der Spulen, oder lastbedingte Lastwinkeländerungen, die wiederum die Phase der Gegen-EMK und damit den effektiven Spulenstrom beeinflussen, berücksichtigen zu können, wird angestrebt, auch in dieser Spannungsbasierten Betriebsart den tatsächlichen Spulenstrom zu messen und das Tastverhältnis der an die Spule angelegten PWM-Spannung entsprechend zu regeln, d.h. mittels eines Reglers, vorzugsweise eines PI-Reglers, nachzuführen.

Dies hat allerdings eine im Vergleich zu der oben genannten Strombasierten Betriebsart relativ langsame Nachführung des tatsächlichen Spulenstromes zur Folge, so dass also mit der Spannungsgeregelten Betriebsart nicht so schnell auf Stromabweichungen reagiert werden kann wie mit der Stromgeregelten Betriebsart (bei der der Spulenstrom in jeder Stromflussphase nachgeregelt wird). Da es bei zahlreichen Anwendungen jedoch häufig erforderlich oder gewünscht ist, einen Schrittmotor insbesondere aus dem Stand relativ schnell zu beschleunigen, besteht in der Spannungsgeregelten Betriebsart bei solchen Anwendungen die Gefahr, dass das Drehmoment des Motors bei der Beschleunigung stark abfällt. Ferner kann beim Abbremsen des Motors aufgrund des nacheilenden Spulenstroms dieser sehr hoch werden.

Ein weiteres Problem besteht darin, dass dann, wenn das Tastverhältnis der an die Spulen angelegten PWM-Spannung zu gering wird, auch in dieser Spannungsgeregelten Betriebsart der tatsächliche Spulenstrom nicht mehr genau genug gemessen und damit auch nicht mehr zuverlässig geregelt werden kann.

Zur Vermeidung dieser Probleme werden in der Spannungsbasierten Betriebsart gemäß der WO 2015/192831 zwei Motorzustände unterschieden, nämlich Stillstand und Drehung des Motors mit niedriger Drehzahl.

Im Stillstand des Motors reicht es im Wesentlichen aus, den Strom nur in der betragsmäßig stärker bestromten Spule zu messen und das effektive Tastverhältnis der PWM-Spannung an dieser Spule entsprechend zu regeln.

Bei Drehung des Motors, bei der auch die Einflüsse der Gegen-EMK, des Lastwinkels sowie die Phasenverschiebung zwischen der an die Spulen angelegten Spannung und dem resultierenden Spulenstrom zu berücksichtigen sind, wird zunächst eine Stromschwelle S in Form eines konstanten Spulen-Stromwertes in der Weise berechnet, dass dieser während einer Sinus-Halbwelle des vorgegebenen Soll-Spulenstromverlaufes nur für eine relativ kurze festgelegte Zeitdauer von z. B. zwischen etwa 5% bis 20% der Zeitdauer der Sinus-Halbwelle erreicht bzw. überschritten wird. Dann wird während jeder Stromflussphase der tatsächliche Spulenstrom I gemessen, mit der Stromschwelle S verglichen und ermittelt, wie lang die Zeitdauer während der Sinus-Halbwelle ist, während der die berechnete Stromschwelle S tatsächlich von dem tatsächlichen Spulenstrom I erreicht und überschritten wird. Anhand des Verhältnisses zwischen dem festgelegten Sollwert und dem Istwert dieser Zeitdauern wird dann mittels eines Reglers, vorzugsweise eines PI-Reglers, in der darauf folgenden Sinus-Halbwelle des Soll-Spulenstroms das Tastverhältnis der an die betreffende Spule angelegten PWM-Spannung erhöht, wenn der Istwert der Zeitdauer kleiner war als deren Sollwert, und das Tastverhältnis (und damit die effektive an die Spule angelegte Spannung) vermindert, wenn die tatsächliche Zeitdauer größer war als die festgelegte Zeitdauer.

Aus der EP 2 251 972 A1 ist ein Verfahren und eine Schaltungsanordnung zur Steuerung der an einen Schrittmotor angelegten Spannung im Spannungsgesteuerten Betrieb beschrieben, und zwar in Abhängigkeit von verschiedenen Motorparametern und einer gewünschten Motorgeschwindigkeit.

In einem Artikel "Voltage mode stepper motor control - Smooth stepper motor driving" (siehe http://www.st.com/resource/en/product_presentation/voltage_mode_ stepper_motor_control.pdf) sind allgemeine Grundsätze der Spannungsgesteuerten Betriebsart bei Schrittmotoren offenbart.

Der Erfindung liegt die Aufgabe zugrunde, das oben eingangs erläuterte bekannte Verfahren und die bekannte Schaltungsanordnung zum Ansteuern eines Schrittmotors in der genannten Spannungsbasierten Betriebsart weiter zu verbessern und insbesondere aus dem Stand oder einer niedrigen Drehzahl des Motors heraus eine noch schnellere Anpassung der Spulenströme und somit eine höhere Beschleunigung des Motors ohne wesentlichen Drehmomentabfall zu ermöglichen.

Gelöst wird diese Aufgabe mit einem Verfahren gemäß Anspruch 1 und einer Schaltungsanordnung gemäß Anspruch 11 zur Durchführung des Verfahrens.

Ein Vorteil dieser Lösungen besteht darin, dass damit auch bei einem starken Abbremsen des Motors die Höhe des (nacheilenden) Spulenstroms begrenzt werden kann.

Die abhängigen Ansprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung. Es zeigt:

Fig. 1    Zeitdiagramme von an eine Motorspule angelegten PWM-Spannungen bzw. dadurch erzeugten Strömen;

Fig. 2    Zeitdiagramme des Verlaufes von an eine Motorspule angelegten Spannungen sowie der resultierenden Ströme und deren Erfassung;

Fig. 3    ein Prinzipschaltbild einer beispielhaften Schaltungsanordnung zur Durchführung der erfindungsgemäßen Verfahren;

Fig. 4    ein Prinzipschaltbild einer Einheit I-U aus Figur 3 für die Spannungsgesteuerte bzw. die Spannungsgeregelte Betriebsart; und

Fig. 5    ein Prinzipschaltbild eines Amplitudenreglers MAR aus Figur 3 für die Spannungsgesteuerte bzw. die Spannungsgeregelte Betriebsart.

Die Erfindung betrifft eine Betriebsart eines Schrittmotors, bei der der Motor im Stillstand und bei niedriger Drehzahl betrieben wird, und bei der die momentanen Soll-Spulenstromwerte in den Spulen dadurch erzeugt werden, dass eine Spannung mit einer entsprechenden Amplitude oder eine PWM-Spannung mit einem entsprechenden Tastverhältnis an die Spulen angelegt wird. Üblicherweise wird eine solche Spannungsbasierte Betriebsart beim Unterschreiten einer vorbestimmten Umschalt-Drehzahl aktiviert, bei der aufgrund von zu kurzen Stromflussphasen, Regelschwankungen, Störgeräuschen etc. eine Einprägung der Soll-Spulenströme (wie sie zum Beispiel aus der oben genannten WO 2015/192831 in Form der Stromgeregelten Betriebsart bekannt ist) nicht mehr sinnvoll möglich ist.

Ein weiteres Kriterium für die Festlegung der Umschalt-Drehzahl kann aus der Tatsache abgeleitet werden, dass in der Spannungsbasierten Betriebsart bei höheren Drehzahlen und/oder einem höheren Lastwinkel des Motors eine Phasenverschiebung zwischen der Spulenspannung und dem Spulenstrom entsteht, so dass sich eine Veränderung der Spulenspannung nur entsprechend zeitverzögert auf den Spulenstrom auswirkt und eine exakte Regelung des aktuell gemessenen Spulenstroms durch Veränderung der Spulenspannung nicht mehr ohne weiteres möglich ist, so dass in die genannte Stromgeregelte Betriebsart umgeschaltet werden muss.

Ein Grundprinzip, das der Erfindung zugrunde liegt, besteht darin, Skalierungsfaktoren zu ermitteln und damit die vorgegebenen momentanen Soll-Spulenstromwerte (vorzugsweise Sinus- bzw. Cosinuswerte) der Soll-Spulenstromverläufe zu skalieren, ohne den tatsächlichen momentanen Spulenstromwert zu messen, so dass die tatsächlichen Spulenströme sehr schnell, d.h. ohne wesentliche Verzögerung zum Beispiel an eine aktuelle Motordrehzahl bzw. Schrittfrequenz angepasst, d.h. gesteuert werden können. Dadurch wird eine höhere Beschleunigung des Motors ohne wesentlichen Drehmomentabfall ermöglicht.

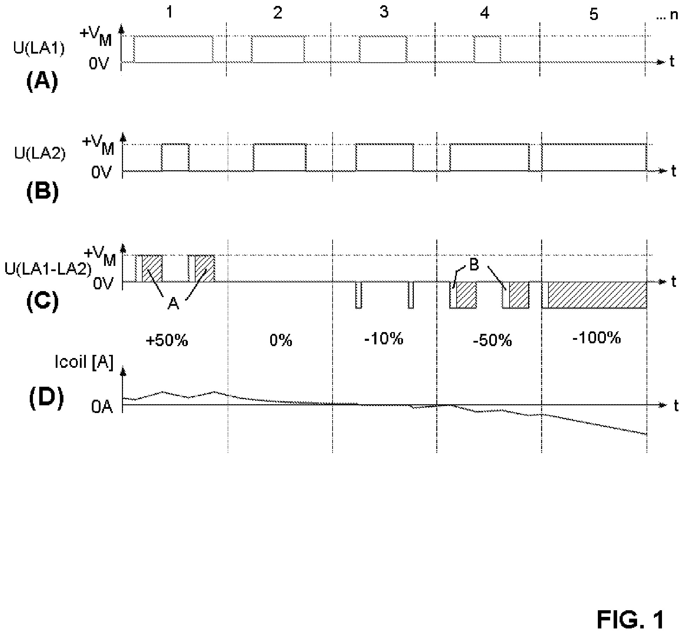

Die skalierten Soll-Spulenstromwerte werden vorzugsweise mittels einer bekannten Chopper-Einheit (Spannungschopper) in PWM-Spannungen mit entsprechendem Tastverhältnis (siehe Figur 1) umgesetzt und an die Spulen angelegt. Alternativ dazu ist es aber auch möglich, die skalierten Soll-Spulenstromwerte in den Spulen, wie es eingangs erwähnt wurde, durch eine an die Spulen angelegte Spannung mit entsprechend geregeltem Betrag bzw. Amplitude und Richtung bzw. Polarität zu erzeugen.

Der Skalierungsfaktor kann in Abhängigkeit von verschiedenen Motorparametern (Spulenwiderstand $R_{COIL}$, Gegen-EMK-Konstante $C_{BEMF}$ des Motors) sowie der Motor-Versorgungsspannung $V_M$ vorbestimmt bzw. gemäß der noch folgenden Erläuterungen berechnet und dann während des Motorbetriebes als konstanter oder nur von der Schrittfrequenz abhängiger Skalierungsfaktor zu der genannten Skalierung der Soll-Spulenstromwerte verwendet werden.

Wenn dabei jedoch eine Abweichung (Fehlanpassung) der tatsächlichen Spulenströme von den Soll-Spulenströmen (insbesondere aufgrund von sich ändernden Motorparametern oder anderen unbekannten Eingangsparametern etc.) verbleibt, die (je nach Anwendungsfall) unerwünscht ist bzw. beseitigt werden soll, so ist es auch möglich, den in der oben genannten oder auf andere Weise vorbestimmten Skalierungsfaktor als Anfangs- oder Initialwert zu verwenden und diesen während des Motorbetriebes zu verändern, d.h. zu optimieren, so dass die Abweichung zumindest weitgehend beseitigt wird.

Eine solche Anpassung ist zum Beispiel dadurch möglich, dass der Skalierungsfaktor mit einem Spannungs-Korrekturwert beaufschlagt, d.h. in Abhängigkeit von diesem erhöht bzw. vermindert wird, der vorzugsweise mit einer Spannungsbasierten Betriebsart, wie sie beispielhaft in der WO 2015/192831 für niedrige Motordrehzahlen erläutert ist, ermittelt wird.

Dies hat den Vorteil, dass sich die, wie eingangs erwähnt, relativ langsame Nachführung des tatsächlichen Spulenstromes mittels der Spannungsbasierten Betriebsart nur auf die Beseitigung der verbliebenen Abweichung bzw. Fehlanpassung der tatsächlichen Spulenströme von den Soll-Spulenströmen auswirkt, da die genannte Steuerung der tatsächlichen Spulenströme durch Beaufschlagung der Soll-Spulenströme mit dem Skalierungsfaktor bereits sehr schnell zu einer zumindest weitgehenden Anpassung der tatsächlichen Spulenströme zum Beispiel an bestimmte Motorparameter und/oder an eine aktuelle Schrittfrequenz bzw. eine hohe Motorbeschleunigung geführt hat.

Nachfolgend wird davon ausgegangen, dass die Soll-Spulenstromwerte, die mit dem (konstanten oder während des Motorbetriebs angepassten) und ggf. mit dem Spannungs-Korrekturwert beaufschlagten Skalierungsfaktor skaliert (d.h. beaufschlagt) wurden, durch das bevorzugte Anlegen von PWM-Spannungen mit entsprechendem Tastverhältnis an die Spulen in diesen erzeugt werden. Grundsätzlich ist es aber wie oben erwähnt auch möglich, Spannungen mit entsprechender Amplitude an die Spulen anzulegen.

Um eine möglichst genaue bzw. schnelle Anpassung des Skalierungsfaktors der Soll-Spulenstromwerte (und damit des Tastverhältnisses der PWM-Spannung) zum Beispiel an eine aktuelle Motordrehzahl zu erzielen, hat es sich als vorteilhaft erwiesen, zwischen einer ersten Komponente PWM_OFS des Skalierungsfaktors für den Stillstand des Motors und einer zweiten Komponente PWM_GRAD des Skalierungsfaktors für die Drehung des Motors zu unterscheiden, um beide getrennt voneinander zu ermitteln und den Skalierungsfaktor für die Soll-Spulenstromwerte aus der Summe dieser beiden Komponenten zu bilden.

Für die für den Stillstand des Motors erforderliche Komponente PWM_OFS gilt:

$$PWM\_OFS = R_{COIL} * I_{COIL} / V_M$$

wobei $R_{COIL}$ den Spulenwiderstand, $I_{COIL}$ den tatsächlichen Spulenstrom und $V_M$ die Motor-Versorgungsspannung, die üblicherweise über eine PWM-Endstufe (d.h. eine Brückenschaltung, in die jeweils eine der Motorspulen geschaltet ist) an die Motorspulen angelegt wird, bezeichnet. PWM_OFS gibt damit den zur Erzielung des Spulenstromes $I_{COIL}$ benötigten Anteil der Versorgungsspannung $V_M$ an und liegt bei geeignet gewählter Versorgungsspannung im Bereich zwischen Null und Eins.

Da sich mit steigender Drehzahl die in den Spulen gegeninduzierte Spannung (Gegen-EMK oder BEMF) proportional erhöht, erhöht sich auch die erforderliche Spulenspannung, um den erforderlichen Spulenstrom einzuprägen. Dieser Tatsache wird durch Einführung der geschwindigkeitsproportionalen zweiten Komponente PWM_GRAD des Skalierungsfaktors Rechnung getragen, für die gilt:

$$PWM\_GRAD = C_{BEMF} [Volt/ (rad/sec)] * 2\pi * 1\,Hz / (V_M * MSPR)$$

wobei $C_{BEMF}$ die Gegen-EMK-Konstante des Motors in Volt pro Radian/Sekunde und MSPR die Anzahl der Mikroschritte je Umdrehung des Motors bezeichnet. PWM_GRAD gibt dann den zur Kompensation der Gegen-EMK des Motors benötigten Anteil der Versorgungsspannung bei einer Schrittfrequenz $f_{STEP}$ von 1 Hz an.

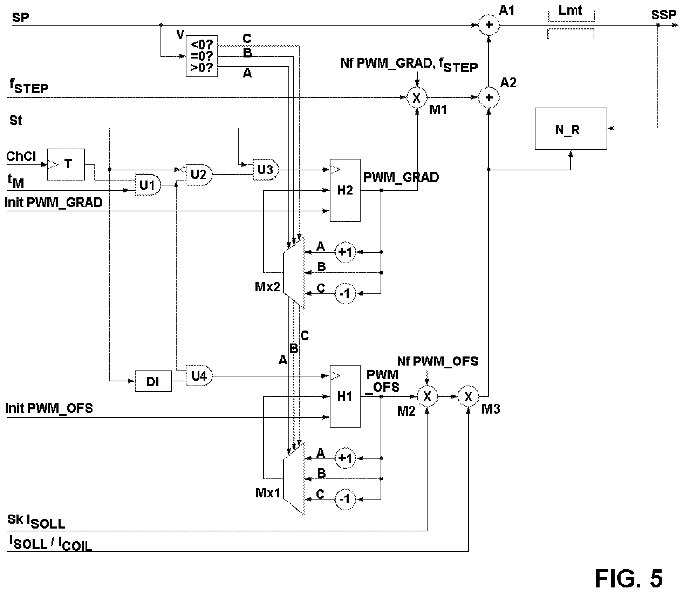

Die auf diese Weise vorab berechneten Komponenten PWM_OFS und PWM_GRAD können gespeichert und, wie oben erwähnt, als Anfangs- oder Initialwerte Init PWM_OFS und Init PWM_GRAD einem Amplitudenregler MAR gemäß Figur 5 (siehe unten) zugeführt werden.

Die Komponenten PWM_OFS und PWM_GRAD können entweder unter Zugrundelegung von typischen Durchschnittswerten von $R_{COIL}$, $I_{COIL}$, $C_{BEMF}$ und $V_M$ für eine bestimmte Art oder Größenklasse von Schrittmotoren, oder unter Zugrundelegung von individuell für einen mit dem erfindungsgemäßen Verfahren zu betreibenden Schrittmotor ermittelten Werten von $R_{COIL}$, $I_{COIL}$, $C_{BEMF}$ und $V_M$ berechnet werden. Im letztgenannten Fall können diese Werte zum Beispiel im Wege einer Referenzfahrt vor der eigentlichen Inbetriebnahme des Schrittmotors ermittelt werden.

Typische Wertebereiche für diese Parameter können sein: $R_{COIL}$ zwischen etwa 0,5 Ohm und etwa 100 Ohm, insbesondere zwischen einigen Ohm und wenigen 10 Ohm, $I_{COIL}$ zwischen etwa 50 mA und etwa 20 Ampere, insbesondere zwischen einigen 100 Milliampere und einigen Ampere, $V_M$ zwischen etwa 3 Volt und etwa 100 Volt, insbesondere zwischen einigen Volt und einigen 10 Volt, $C_{BEMF}$ im Bereich einiger Volt/Rad/sek, sowie MSPR insbesondere zwischen etwa 4 bis etwa 1024 Mikroschritten, multipliziert mit der Vollschrittanzahl des Motors von zwischen wenigen 10 bis etwa 400, jedoch auch zwischen etwa 1.000 und etwa 100.000.

Der Skalierungsfaktor für die Sinus- bzw. Cosinuswerte der Soll-Spulenstromverläufe ergibt sich somit unter Berücksichtigung einer momentanen Schrittfrequenz $f_{STEP}$ wie folgt:

$$\text{Skalierungsfaktor} = PWM\_OFS + PWM\_GRAD * f_{STEP}$$

Die tatsächlich aufgrund dieser Berechnung an die Motorspule angelegte Spannung wird nach oben hin begrenzt auf die Höhe der Versorgungsspannung $V_M$.

Vorzugsweise kann der Soll-Spulenstrom $I_{SOLL}$ im laufenden Betrieb des Motors zur Verfeinerung zum Beispiel an das erforderliche Drehmoment angepasst werden. Hierzu wird die Komponente PWM_OFS mittels des Verhältnisses zwischen dem momentanen Soll-Spulenstrom $I_{SOLL}$ und dem für die Bestimmung der Komponente PWM_OFS verwendeten oder einem momentanen tatsächlichen Spulenstrom $I_{COIL}$ (zum Beispiel auch ein maximaler Spulen- oder Treiberstrom) skaliert, so dass sich der bevorzugte Skalierungsfaktor wie folgt ergibt:

$$\text{Skalierungsfaktor} = PWM\_OFS * I_{SOLL}/I_{COIL} + PWM\_GRAD * f_{STEP}$$

Wie bereits erwähnt wurde, ist damit eine sehr schnelle, jedoch für bestimmte Anwendungen möglicherweise noch nicht ausreichend genaue Anpassung des Skalierungsfaktors der Soll-Spulenstromwerte und somit der Tastverhältnisse der an die Spulen angelegten PWM-Spannungen an die Motorparameter bzw. eine aktuelle Schrittfrequenz möglich.

Ursachen für die verbleibende Ungenauigkeit können u.a. Schwankungen der Versorgungsspannung und des Motorinnenwiderstandes (verursacht durch Temperaturabhängigkeiten und Exemplarstreuungen) sein. Ferner verschiebt sich die Gegen-EMK-Spannung aufgrund der vektoriellen Addition zwischen rotierendem Spannungsvektor der Anregung und der Gegen-EMK in Abhängigkeit vom Lastwinkel des Motors. Schließlich wird bei der Ermittlung des Skalierungsfaktors auch der Innenwiderstand der Motorinduktivität nicht berücksichtigt.

Vorzugsweise wird die dadurch verursachte, verbleibende Abweichung bzw. Fehlanpassung durch Beaufschlagung des Skalierungsfaktors mit einem Spannungs-Korrekturwert beseitigt, der zum Beispiel in einer Spannungsbasierten Betriebsart des Motors ermittelt werden kann. Deshalb soll zunächst diese Betriebsart an sich erläutert werden.

In Figur 1 ist für fünf Stromflusszyklen (auch Chopperzyklen genannt) 1, 2, 3,...5 eine erste und eine zweite PWM-Spannung U(LA1), U(LA2) gezeigt, mit denen jeweils eine Versorgungsspannung $+V_M$ an mindestens eine der Motorspulen angelegt wird, und zwar mit jeweils entgegengesetzten Polungen, so dass durch Veränderung der Pulsweiten dieser beiden Spannungen relativ zueinander eine effektive PWM-Spannung in Form einer Differenzspannung U(LA1-LA2) (Figur 1(C)) mit positiver oder negativer Polarität an die betreffende Motorspule angelegt werden kann, deren effektives Tastverhältnis zwischen -100% (negative Polarität) und +100% (positive Polarität) einstellbar ist. Der daraus resultierende, tatsächliche Spulenstromverlauf $I_{COIL}$ ist in Figur 1(D) beispielhaft angedeutet und wird somit durch einer Vielzahl n von solchen Stromflusszyklen 1,2,...n erzeugt.

Dabei kann der tatsächliche, durch die effektive PWM-Spannung (d.h. die Differenzspannung U(LA1-LA2)) erzeugte Spulenstrom $I_{COIL}$ nur in den Zeitbereichen jeder Stromflussphase gemessen werden, die in Figur 1(C) schraffiert und mit dem Buchstaben A bezeichnet sind, während die Blankzeiten, in denen aus den oben genannten Gründen nicht gemessen werden kann, mit dem Buchstaben B angedeutet sind.

Zur Lösung des sich daraus insbesondere bei geringem effektivem Tastverhältnis ergebenden Problems werden in der Spannungsbasierten Betriebsart, wie eingangs bereits erwähnt wurde, zwei Motorzustände unterschieden, nämlich Stillstand und Drehung des Motors.

Im Stillstand des Motors ist die Geschwindigkeit, mit der die Spulenströme geregelt werden müssen, gering bzw. unkritisch, da sich die den Strom beeinflussenden Größen, wie z.B. die Versorgungsspannung und die Motortemperatur oder auch Vorgabewerte des Soll-Spulenstroms, nicht oder nur langsam ändern. Da der Motor an einer festen elektrischen und damit mechanischen Position steht, ist der Strom in beiden Motorspulen konstant. Befindet sich der Motor im Mikroschrittbetrieb, in dem die beiden Motorspulen mit sinus- bzw. cosinus-förmigen Stromverläufen angesteuert werden, und liegt der Stromwert in einer ersten Spule an oder nahe dem Spitzenwert der Sinuswelle, so ist der Stromwert in der anderen zweiten Spule bei oder nahe null. Damit ist auch das effektive Tastverhältnis an dieser zweiten Spule bei oder nahe null, so dass aufgrund der oben beschriebenen Blankzeit nur der Strom in der ersten Spule (in der der höhere Strom fließt) gemessen werden kann. Somit wird also vorzugsweise stets der Strom in der betragsmäßig stärker bestromten Spule gemessen und das effektive Tastverhältnis der Differenzspannung U(LA1-LA2) an dieser Spule entsprechend geregelt, und zwar in jedem Stromflusszyklus 1, 2,...n durch Einstellung des Tastverhältnisses der ersten und der zweiten PWM-Spannung U(LA1), U(LA2) gemäß Figur 1(A) bzw. Figur 1(B).

Die Stromflusszyklen (Chopperzyklen) 1, 2,...n haben dabei vorzugsweise alle die gleiche Zeitdauer und wiederholen sich mit einer Zyklusfrequenz, die durch ein (Chopper-) Taktsignal ChCl bestimmt wird, wobei jeder Stromflusszyklus wie in Figur 1(A) und 1(B) gezeigt jeweils einen Impuls der ersten und der zweiten PWM-Spannung U(LA1), U(LA2) beinhaltet, die dann die Differenzspannung U(LA1-LA2) an der betreffenden Spule bilden.

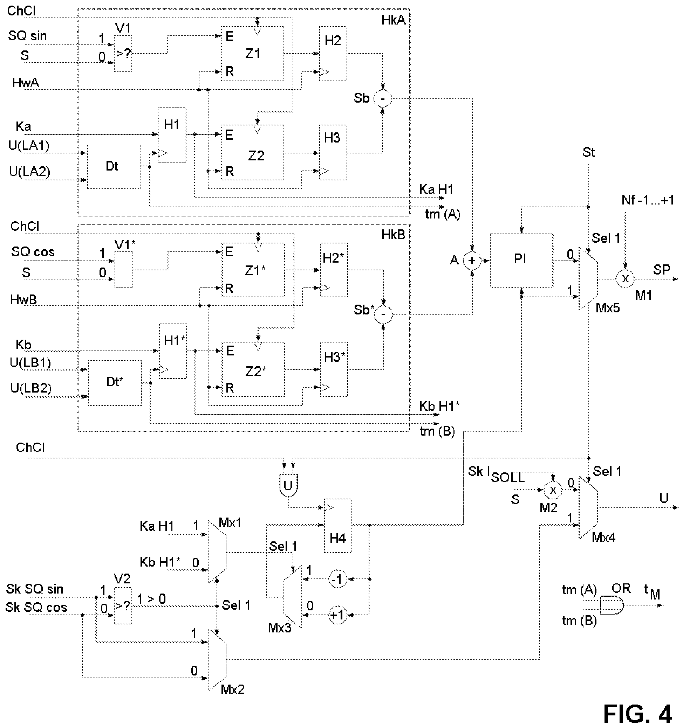

Das oben genannte effektive Tastverhältnis der Differenzspannung U(LA1-LA2) an der stärker bestromten Spule wird verfahrensgemäß vorzugsweise wie folgt geregelt, wobei die Schaltungstechnische Realisierung anhand von Figur 4 beschrieben werden wird:

In einem ersten Schritt wird während einer ersten Stromflussphase der tatsächliche momentane Spulenstromwert (z.B. mittels eines Messwiderstandes) in der stärker bestromten Spule gemessen und mit dem momentanen Soll-Spulenstromwert verglichen.

Wenn der gemessene Ist-Spulenstromwert betragsmäßig kleiner ist als der momentane Soll-Spulenstromwert, so wird in einem zweiten Schritt das Tastverhältnis einer der beiden PWM-Spannungen U(LA1); U(LA2) erhöht und/oder das Tastverhältnis der anderen PWM-Spannung U(LA2); U(LA1) vermindert, wobei die Auswahl derjenigen ersten bzw. zweiten PWM-Spannung (die in entgegengesetzter Richtung an die Spule angelegt werden), deren Tastverhältnis erhöht bzw. vermindert wird, so gewählt wird, dass sich entsprechend der vorgegebenen momentanen Polarität des Soll-Spulenstromwertes der Betrag des tatsächlichen Spulenstromwertes erhöht.

Wenn jedoch der gemessene Spulenstromwert betragsmäßig größer ist als der momentane Soll-Spulenstromwert, so wird stattdessen in einem dritten Schritt das Tastverhältnis mindestens einer der beiden PWM-Spannungen in umgekehrter Richtung verändert, so dass sich entsprechend der vorgegebenen momentanen Polarität des Soll-Spulenstromwertes der Betrag des tatsächlichen Spulenstromwertes vermindert.

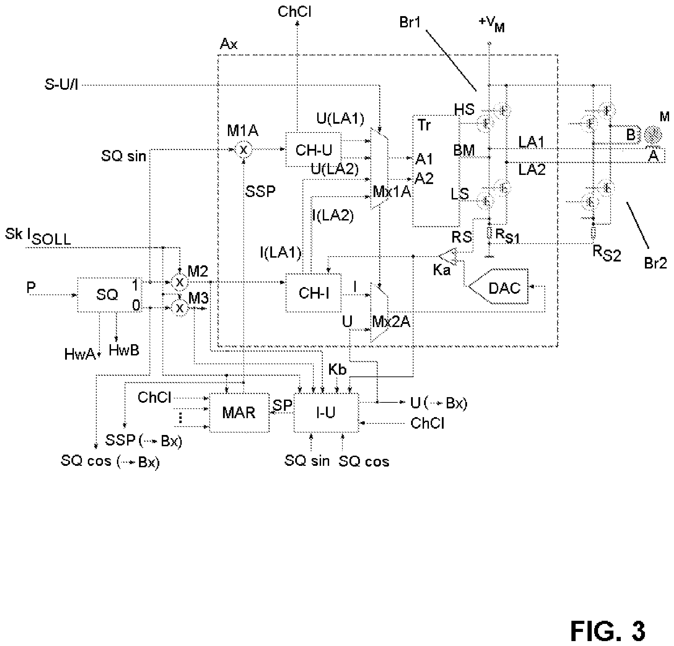

Die Veränderung des Tastverhältnisses geschieht dabei durch Beaufschlagung der Soll-Spulenstromwerte mit einem entsprechend der Abweichung ermittelten Spannungs-Korrekturwert (der zum Beispiel mittels der Einheit I-U gemäß Figur 4 in Form des Ausgangssignals SP erzeugt wird), bevor die Soll-Spulenstromwerte einer PWM-Einheit (zum Beispiel einen ersten Chopper CH-U gemäß Figur 3) zugeführt und mit dieser dann in PWM-Spannungen U(LA1); U(LA2) mit entsprechendem Tastverhältnis umgewandelt und an die Motorspulen angelegt werden.

Gleichzeitig wird in der nächsten Stromflussphase der durch das veränderte Tastverhältnis entsprechend veränderte tatsächliche momentane Spulenstromwert wie in dem ersten Schritt gemessen und der oben genannte Ablauf wiederholt. Auf diese Weise pendelt also das effektive Tastverhältnis der Differenzspannung (Figur 1(C)) und damit auch der tatsächliche Spulenstromwert um den jeweiligen momentanen Soll-Spulenstromwert.

Der Vergleich des tatsächlichen momentanen Ist-Spulenstromwertes mit dem momentanen Soll-Spulenstromwert erfolgt vorzugsweise mittels eines Komparators, wobei der Zeitpunkt des Vergleiches vorzugsweise möglichst in die zeitliche Mitte jeder Stromflussphase gelegt wird. Damit wird dem Umstand Rechnung getragen, dass der Strom in einer Spule nach jedem Einschalten aufgrund der Spuleninduktivität von einem Startwert auf einen Endwert ansteigt und in der Pause zwischen zwei Stromflussphasen am Innenwiderstand der Spule und der betreffenden Treiberschaltung wieder im Wesentlichen von dem Endwert auf den Startwert absinkt.

Der Betrag der jeweiligen Veränderung der Spannungs-Korrekturwerte ist dabei vorzugsweise konstant und gleich und wird in der Weise vorbestimmt, dass die Amplitude, mit der der tatsächliche Spulenstromwert um den Soll-Spulenstromwert pendelt, einerseits nicht zu groß wird, andererseits der tatsächliche Spulenstromwert aber dem Soll-Spulenstromwert schnell genug folgen kann. Die Festlegung dieses Betrages kann entsprechend der Art des Motors und den Einsatzbedingungen durch Versuche festgelegt werden.

Die Amplitude des Stroms in der Spule, in der der betragsmäßig niedrigere Strom fließt, stellt sich automatisch auf den richtigen Wert ein, wenn die Spannungs-Korrekturwerte für die PWM-Spannungen an beiden Spulen proportional nachgeregelt werden, da der Innenwiderstand der Spulen eines Motors aufgrund des symmetrischen Aufbaus des Motors als zumindest weitgehend identisch angenommen werden kann. Ein Pendeln der tatsächlichen Stromamplituden aufgrund der Aktivität des Reglers um die Amplitude des Soll-Spulenstromes ist aufgrund der zeitversetzten Regelung des Stroms in beiden Spulen weitestgehend identisch und erzeugt deshalb keinen relevanten Fehler im elektrischen Winkel zwischen den beiden Spulen.

Bei einer Drehung des Motors (oder Drehung oberhalb einer vorbestimmten Mindest-Drehzahl) wird der oben beschriebene Algorithmus für den Motor-Stillstand vorzugsweise nicht weiter angewendet, da sich prinzipbedingt durch die Gegen-EMK des Motors und durch die Induktivität der Spulen eine mit steigender Drehzahl steigende Phasenverschiebung zwischen der effektiven, an die Spulen angelegten Spannung und dem resultierenden effektiven Spulenstrom ergibt. Der Winkel dieser Phasenverschiebung ist vorab nicht bekannt, da er sowohl von der Drehzahl des Motors und den Motoreigenschaften als auch von der Last an dem Motor abhängig ist. Wenn dieser Phasenwinkel jedoch nicht berücksichtigt wird, ergibt sich eine fehlerhafte hinterherlaufende Regelung des Spulenstroms, da der momentane Spulenstromwert nicht dem momentanen Soll-Spulenstromwert entsprechend kann.

Weiterhin ist zu beachten, dass es erforderlich ist, beim Drehen des Motors den tatsächlichen Spulenstrom schneller nachregeln zu können als beim Stillstand des Motors, da beispielsweise die Beschleunigung des Motors auf eine höhere Drehzahl in wenigen Millisekunden, d.h. im Halb- oder Vollschrittbetrieb innerhalb weniger Vollschritt-Zyklen bzw. im Mikroschrittbetrieb innerhalb weniger Sinus-Zyklen möglich sein soll.

Diese beiden Probleme bei der spannungsbasierten Betriebsart werden vorzugsweise dadurch gelöst, dass beim Drehen des Motors die Spannungs-Korrekturwerte mittels eines Reglers, vorzugsweise eines PI-Reglers, erzeugt werden, mit dem eine relativ kurze Einschwingzeit bei gleichzeitig relativ geringer Regelabweichung erzielt werden kann.

Verfahrensgemäß wird dies vorzugsweise wie folgt realisiert, wobei die Schaltungstechnische Realisierung anhand von Figur 4 beschrieben werden wird:

Beim Starten des Motors, d.h. mit dem Beginn einer Drehbewegung, wird für den Motor zunächst der letzte, während des Stillstands des Motors ermittelte Spulen-Stromwert verwendet. Da jedoch, wie oben bereits erwähnt wurde, die Phasenverschiebung zwischen der an die Motorspule angelegten PWM-Spannung und dem tatsächlichen Spulenstrom nicht vernachlässigbar und auch nicht bekannt ist, ist es nicht möglich, zum Zeitpunkt des Anlegens der PWM-Spannung zu bestimmen, ob der zu diesem Zeitpunkt gemessene tatsächliche Spulen-Stromwert mit dem vorgegebene Soll-Spulenstromwert übereinstimmt.

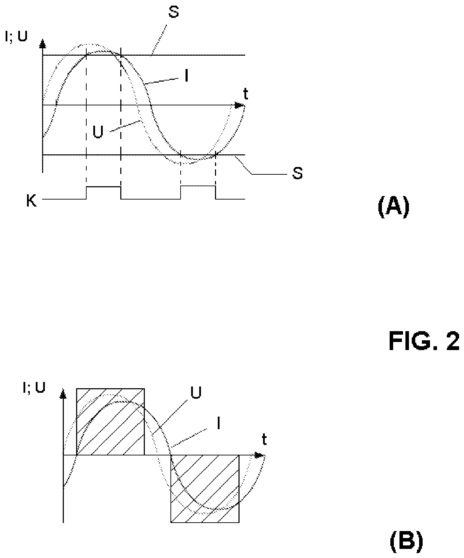

Deshalb wird zunächst gemäß Figur 2(A) eine Stromschwelle S in Form eines konstanten Spulen-Stromwertes in der Weise berechnet, dass dieser während einer Sinus-Halbwelle des vorgegebenen Soll-Spulenstromverlaufes nur für eine relativ kurze festgelegte Zeitdauer von z. B. zwischen etwa 5% bis 20% der Zeitdauer der Sinus-Halbwelle erreicht bzw. überschritten wird. Dann wird während jeder Stromflussphase der tatsächliche Spulenstrom I gemessen, mit der Stromschwelle S verglichen und ermittelt, wie lang die Zeitdauer während der Sinus-Halbwelle ist, während der die berechnete Stromschwelle S tatsächlich von dem tatsächlichen Spulenstrom I erreicht und überschritten wird.

Anhand des Verhältnisses zwischen dem festgelegten Sollwert und dem Istwert dieser Zeitdauern wird dann mittels des Reglers (vorzugsweise eines PI-Reglers) ein Spannungs-Korrekturwert (SP) erzeugt, über den in der darauf folgenden Sinus-Halbwelle des Soll-Spulenstroms das Tastverhältnis der an die betreffende Spule angelegten PWM-Spannung erhöht wird, wenn der Istwert der Zeitdauer kleiner war als deren Sollwert, und das Tastverhältnis (und damit die effektive an die Spule angelegte Spannung) vermindert wird, wenn der Istwert der Zeitdauer größer war als der Sollwert der Zeitdauer. Gleichzeitig wird in dieser Sinus-Halbwelle wiederum der Istwert der genannten Zeitdauer gemessen und mit dem Sollwert verglichen, so dass gleichzeitig in der nächsten Sinus-Halbwelle das Tastverhältnis der dann angelegten PWM-Spannung gegebenenfalls erneut durch entsprechende Veränderung des Spannungs-Korrekturwertes angepasst werden kann.

Da bei einem 2-Phasen Motor zwei Spulen vorhanden sind, können also in jeder elektrischen Periode der Spulenströme vier Halbwellen auf diese Weise gemessen werden, so dass in jedem Vollschritt ein neues Messergebnis verfügbar wird und der Spulenstrom nachgeregelt werden kann.

Auf diese Weise ist es möglich, wesentlich schneller auf eine Abweichung des tatsächlichen Spulenstromwertes von einem Soll-Spulenstromwert zu reagieren, als durch einen reinen Vergleich, ob der Soll-Spulenstromwert überhaupt erreicht wurde.

In Figur 2(A) ist dieser Vergleich anhand eines angenommenen tatsächlichen Spulenstromverlaufes I, der durch eine an die Spule angelegte (PWM-) Spannung U erzeugt wird, dargestellt. Die Stromschwelle, die (vorzugsweise für jede Sinus-Halbwelle) so berechnet wurde bzw. wird, dass sie nur während einer relativ kurzen Zeitdauer einer Sinus-Halbwelle des vorgegebenen Soll-Spulenstromverlaufes erreicht und überschritten wird, ist mit dem Buchstaben S bezeichnet. Weiterhin ist das Ausgangssignal K eines Komparators dargestellt, das immer dann einen hohen Pegel annimmt, wenn der tatsächliche Spulenstromwert I die Stromschwelle S erreicht und überschreitet.

Bei der Festlegung der Stromschwelle S ist noch folgendes zu berücksichtigen: wie oben mit Bezug auf Figur 1(C) bereits erläutert wurde, kann ein tatsächlicher Spulenstrom nicht mehr gemessen werden, wenn das Tastverhältnis der an die Spule angelegten effektiven PWM-Spannung zu gering bzw. die resultierende effektive Spannung zu niedrig wird. Der Zeitbereich, innerhalb dessen der tatsächliche Spulenstrom gemessen werden kann (schraffierter Bereich A in Figur 1(C)), ist beispielhaft in Figur 2(B) wiederum schraffiert angedeutet.

Da also zur Messung des tatsächlichen Spulenstroms eine bestimmte Mindesthöhe der an die betreffende Spule angelegten effektiven Spannung (bzw. deren Tastverhältnisses) erforderlich ist, kann es bei einer großen Phasenverschiebung des tatsächlichen Spulenstroms dazu kommen, dass die tatsächliche Zeitdauer der Überschreitung der Stromschwelle S während einer Sinus-Halbwelle größer ist, als die gemessene Zeitdauer dieser Überschreitung. In der Darstellung der Figur 2(B) kann nämlich der tatsächliche Spulenstromwert I nur innerhalb des schraffierten Bereiches mit der Stromschwelle S (wie in Figur 2(A)) verglichen werden. Umgekehrt vermindert sich also die Zeitdauer der tatsächlich gemessenen Überschreitung der Stromschwelle S mit steigender Phasenverschiebung (d.h. insbesondere bei hoher Drehzahl). Dies hat zur Folge, dass der PI-Regler somit den tatsächlichen Spulenstromwert stärker anheben würde, als dies dem Soll-Spulenstromverlauf entspricht.

Wenn dieser Fehler einen vorbestimmten Wert übersteigt, sollte deshalb von der Spannungsbasierten Betriebsart auf eine zum Beispiel in der WO 2015/192831 beschriebene Stromgeregelte Betriebsart umgeschaltet werden. Üblicherweise wird die Umschalt-Geschwindigkeit bzw. Umschalt-Drehzahl des Motors bei einigen zehn oder wenigen 100 Hz der Frequenz des Spulenstromes festgelegt. Innerhalb dieses Bereiches ist die Phasenverschiebung nämlich meist moderat, so dass die Messung ausreichend genau erfolgen kann.

Der auf die oben beschriebene Weise in der Spannungsbasierten Betriebsart für den Stillstand und die Drehung des Motors unterhalb einer Umschalt-Drehzahl ermittelte Spannungs-Korrekturwert (SP) dient, wie bereits erwähnt wurde, vorzugsweise zur Beseitigung einer eventuellen Abweichung bzw. Fehlanpassung des tatsächlichen Spulenstroms von einem Soll-Spulenstrom, die aufgrund des (sehr schnell) ermittelten Skalierungsfaktors verblieben ist (der Skalierungsfaktor dient also zur Skalierung des Soll-Spulenstroms und ist, sofern erforderlich, mit dem Spannungs-Korrekturwert beaufschlagt, d.h. er kann, wenn er nicht erforderlich ist, auch den Wert 0 bzw. den Faktor 1 aufweisen).

Figur 3 zeigt ein Blockschaltbild einer beispielhaften Ausführungsform einer Schaltungsanordnung zur Durchführung der erfindungsgemäßen Verfahren zur Ansteuerung eines 2-Phasen Schrittmotors M mit einer ersten Motorspule A und einer zweiten Motorspule B.

Die in der gestrichelt angedeuteten ersten Steuereinheit Ax gezeigten Komponenten dienen zur Ansteuerung der ersten Motorspule A mit einem sinusförmigen Soll-Spulenstromverlauf. Eine gleiche zweite Steuereinheit Bx ist noch einmal zur Ansteuerung der zweiten Motorspule B mit einem cosinusförmigen Soll-Spulenstromverlauf vorzusehen, die hier jedoch nicht dargestellt ist. Nachfolgend wird auf die Komponenten der zweiten Steuereinheit Bx nur insoweit Bezug genommen, wie es für die Erläuterung der Erfindung notwendig ist.

Die Schaltungsanordnung umfasst als an sich bekannte Komponenten eine integrierte Motor-Treiberschaltung Tr, mit der über erste Ausgänge HS (High Side), LS (Low Side) und BM (Brückenmittelpunkt) eine zwischen einer Versorgungsspannung $+V_M$ und Masse liegende erste Brückenschaltung Br1 angesteuert wird, um in der erfindungsgemäßen spannungsbasierten Betriebsart eine erste PWM-Spannung U(LA1) gemäß Figur 1(A) in einer ersten Richtung und eine zweite PWM-Spannung U(LA2) gemäß Figur 1(B) in der entgegengesetzten zweiten Richtung an die erste Spule A des Motors M anzulegen, so dass eine effektive PWM-Spannung gemäß Figur 1(C) entsteht.

Ferner dienen die Treiberschaltung Tr und die erste Brückenschaltung Br1 dazu, in einer stromgeregelten Betriebsart wie sie zum Beispiel in der WO 2015/192831 beschrieben ist, die Stromflussphasen zu schalten, um die Ströme I(LA1), I(LA2) mit entsprechenden Polaritäten in die erste Spule A einzuprägen.

Die in beiden Fällen tatsächlich durch die erste Spule A fließenden Spulenströme werden durch den Spannungsabfall an einem ersten Messwiderstand $R_{S1}$ im Fußpunkt der Brückenschaltung gemessen und einem ersten Eingang (+ Eingang) eines Komparators Ka zugeführt.

Die zweite Spule B des Motors M ist in eine zweite Brückenschaltung Br2 mit einem zweiten Messwiderstand $R_{S2}$ geschaltet, die in entsprechender Weise wie oben beschrieben über zweite Ausgänge HS (High Side), LS (Low Side) und BM (Brückenmittelpunkt) der Treiberschaltung Tr, die hier nicht dargestellt sind, angesteuert wird. Die tatsächlich durch die zweite Spule B fließenden Spulenströme werden durch den Spannungsabfall an einem zweiten Messwiderstand $R_{S2}$ im Fußpunkt der Brückenschaltung gemessen und einem ersten Eingang (+ Eingang) eines Komparators Kb der zweiten Steuereinheit Bx zugeführt.

Alternativ dazu ist es auch möglich, auf den Komparator Ka (Kb) und den weiter unten noch erläuterten Digital/Analog-Wandler DAC zu verzichten und statt dessen einen Analog/Digital-Wandler vorzusehen, mit dem die an dem Messwiderstand $R_{S1}$ ($R_{S2}$) abfallende Spannung digitalisiert wird, so dass der Vergleich der Ist- und der Soll-Spulenströme vollständig in der digitalen Ebene erfolgt.

Die Schaltungsanordnung umfasst ferner in den beiden Steuereinheiten Ax, Bx jeweils einen an sich bekannten ersten Chopper CH-U (Spannungschopper) für die erfindungsgemäße spannungsbasierte Betriebsart, an dessen ersten und zweiten Ausgang die erste PWM-Spannung U(LA1) (bzw. U(LB1)) gemäß Figur 1(A) bzw. die zweite PWM-Spannung U(LA2) (bzw. U(LB2)) gemäß Figur 1(B) anliegt, die mit ersten Eingängen eines ersten Multiplexers MxIA (bzw. Mx1B) verbunden sind. An einem dritten Ausgang des ersten Choppers CH-U liegt das mit diesem erzeugte (Chopper-) Taktsignal ChCI an.

Ein Eingang des ersten Choppers CH-U ist mit dem Ausgang eines ersten Multiplizierers M1A verbunden, dessen nachfolgend noch erläutertes Ausgangssignal mittels des ersten Choppers CH-U in die beiden PWM-Spannungen U(LA1), U(LA2) mit den entsprechenden Tastverhältnissen umgesetzt wird.

Weiterhin ist ein bekannter zweiter Chopper CH-I (Stromchopper) für die stromgeregelte (zweite) Betriebsart vorgesehen, an dessen beiden ersten Ausgängen die für die beiden Polaritäten der Spulenströme I(LA1), I(LA2) erzeugten Schaltsignale der Stromflussphasen anliegen, die mit zweiten Eingängen des ersten Multiplexers MxIA verbunden sind.

Der zweite Chopper CH-I weist einen ersten Eingang auf, der mit dem Ausgang des Komparators Ka verbunden ist, einen zweiten Eingang, der mit dem Ausgang eines zweiten Multiplizierers M2 verbunden ist, sowie zweiten Ausgang für Strom-Vergleichswerte für die strombasierte Betriebsart, der mit einem ersten Eingang I eines zweiten Multiplexers Mx2A verbunden ist.

Der erste Multiplexer MxIA weist zwei Ausgänge auf, die mit den Eingängen A1, A2 der Treiberschaltung Tr verbunden sind. Der erste Multiplexer MxIA wird mittels eines der Schaltungsanordnung zugeführten Schaltsignals S-U/I zur Umschaltung zwischen der spannungsbasierten und einer bekannten strombasierten Betriebsart in Abhängigkeit von der Geschwindigkeit bzw. der Drehzahl des Motors geschaltet, so dass in der spannungsbasierten Betriebsart die beiden Ausgänge des ersten Choppers CH-U und in der strombasierten Betriebsart die beiden ersten Ausgänge des zweiten Choppers CH-I an die Eingänge A1, A2 der Treiberschaltung Tr angelegt werden.

Wie oben bereits erwähnt wurde, wird die entsprechend der Polarität der Spulenströme an dem ersten Messwiderstand $R_{S1}$ abfallende positive bzw. negative Spannung RS dem ersten (+) Eingang des Komparators Ka zugeführt, an dessen zweitem (-) Eingang der Ausgang eines Digital/Analog-Wandlers DAC anliegt, mit dem die wie folgt beschrieben vorzugsweise in der digitalen Ebene erzeugten Vergleichswerte in analoge Spannungswerte umgewandelt werden, um die jeweiligen tatsächlichen Spulenstromwerte mit den Soll-Spulenstromwerten zu vergleichen.

Das Ausgangssignal am Ausgang des Komparators Ka der ersten Steuereinheit Ax wird ferner einem ersten Eingang einer Einheit I-U zur Stromnachführung zugeführt. Das Ausgangssignal des Komparators Kb der zweiten (gleichen) Steuereinheit Bx liegt an einem zweiten Eingang der Einheit I-U an.

Ein dritter Eingang der Einheit I-U ist mit dem Ausgang des zweiten Multiplizierers M2 verbunden, während ein vierter Eingang der Einheit I-U an dem Ausgang eines dritten Multiplizierers M3 anliegt.

Die Einheit I-U umfasst ferner einen ersten Ausgang für Spannungs-Vergleichswerte U für die spannungsbasierte Betriebsart, der an einem zweiten Eingang des zweiten Multiplexers Mx2A der ersten Steuereinheit Ax sowie einem zweiten Eingang des zweiten Multiplexers Mx2B (nicht dargestellt) der zweiten Steuereinheit Bx anliegt, sowie einen zweiten Ausgang für Spannungs-Korrekturwerte SP für die spannungsbasierte Betriebsart, der mit einem ersten Eingang eines Amplitudenreglers MAR verbunden ist.

Ein aktueller momentaner Phasenwinkel P eines vorgegebenen Soll-Spulenstroms wird einem Eingang eines Sequenzers SQ mit einer Sinus-/Cosinus-Tabelle zugeführt, mit dem an dessen ersten bzw. zweiten Ausgang die dem betreffenden Phasenwinkel entsprechenden sinus- bzw. cosinus-Soll-Spulenstromwerte SQ sin, SQ cos für die erste bzw. die zweite Spule A, B erzeugt werden.

Der dem jeweils aktuellen Phasenwinkel P für die erste Spule A entsprechende sinus-Soll-Spulenstromwert SQ sin am ersten Ausgang 1 des Sequenzers SQ wird einem ersten Eingang des ersten Multiplizierers M1A der ersten Steuereinheit Ax, einem ersten Eingang des zweiten Multiplizierers M2 sowie einem fünften Eingang der Einheit I-U zugeführt.

Der dem jeweiligen aktuellen Phasenwinkel P für die zweite Spule B entsprechende cosinus-Soll-Spulenstromwert SQ cos am zweiten Ausgang 0 des Sequenzers SQ wird einem ersten Eingang eines ersten Multiplizierers M1B (nicht dargestellt) der zweiten Steuereinheit Bx, einem ersten Eingang des dritten Multiplizierers M3 sowie einem sechsten Eingang der Einheit I-U zugeführt.

Wie bereits erwähnt wurde, ist der Ausgang des zweiten Multiplizierers M2 auch mit dem zweiten Eingang des zweiten Chopper CH-I der ersten Steuereinheit Ax verbunden. Entsprechend liegt der Ausgang des dritten Multiplizierers M3 auch an einem zweiten Eingang eines zweiten Choppers der zweiten Steuereinheit Bx an.

Ein der Schaltungsanordnung zugeführter Faktor Sk $I_{SOLL}$ für eine Skalierung der von dem Sequenzer SQ ausgegebenen Soll-Spulenstromwerte ("Sollstrom-Skalierfaktor"), zum Beispiel zum Zwecke der Absenkung des Soll-Spulenstroms im Stillstand des Motors, liegt an einem zweiten Eingang des zweiten Multiplizierers M2, einem zweiten Eingang des dritten Multiplizierers M3 sowie einem siebten Eingang der Einheit I-U und einem zweiten Eingang des Amplitudenreglers MAR an.

Einem achten Eingang der Einheit I-U sowie einem dritten Eingang des Amplitudenreglers MAR wird schließlich auch das mit dem ersten Choppers CH-U erzeugte (Chopper-) Taktsignal ChCl zugeführt.

Mit dem Amplitudenregler MAR werden, wie anhand von Figur 5 noch beschrieben werden wird, aus den von der Einheit I-U zugeführten Spannungs-Korrekturwerten SP skalierte Spannungs-Korrekturwerte (Skalierungsfaktoren) SSP erzeugt, die über einen Ausgang des Amplitudenreglers MAR einem zweiten Eingang des ersten Multiplizierers M1A der ersten Steuereinheit Ax sowie einem zweiten Eingang des ersten Multiplizierers M1B der zweiten Steuereinheit Bx zugeführt werden.

Am Ausgang des ersten Multiplizierers M1A (M1B) der ersten sowie der zweiten Steuereinheit Ax, Bx liegen somit die mit dem Skalierungsfaktor SSP multiplizierten Soll-Spulenstromwerte des Sequenzers SQ an, die dem ersten Eingang des ersten Choppers CH-U zugeführt werden.

Der erste Chopper CH-U erzeugt, wie schon erwähnt wurde, für die spannungsbasierte Betriebsart in Abhängigkeit von den an seinen beiden Eingängen anliegenden Signalen die erste und die zweite PWM-Spannung U(LA1), U(LA2) gemäß Figur 1(A) bzw. 1(B), die dann mittels der Treiberschaltung Tr und der Brückenschaltung Br in entgegengesetzten Richtungen an die erste Spule A angelegt werden, um die effektive PWM-Spannung gemäß Figur 1(C) zu erzeugen.

Der zweite Chopper CH-I erzeugt an seinem mit dem ersten Eingang I des zweiten Multiplexer Mx2A verbundenen zweiten Ausgang in Abhängigkeit von dem an seinem ersten Eingang anliegenden Ausgangssignal des Komparators Ka, sowie den an seinem zweiten Eingang anliegenden, mit dem Sollstrom-Skalierfaktor Sk $I_{SOLL}$ multiplizierten Soll-Spulenstromwerten des Sequenzers SQ, die Strom-Vergleichswerte für die strombasierte Betriebsart, die über den zweiten Multiplexer Mx2A während dieser Betriebsart an den Eingang des Digital/Analog-Wandlers DAC angelegt werden.

Der Ausgang des zweiten Multiplexers Mx2A ist dazu mit dem Eingang des Digital/Analog-Wandlers DAC verbunden. Der zweite Multiplexer Mx2A wird durch das gleiche Schaltsignal S-U/I geschaltet, wie der erste Multiplexer MxIA, so dass in der spannungsbasierten Betriebsart die an dem ersten Ausgang der Einheit I-U anliegenden Spannungs-Vergleichswerte U und in der strombasierten Betriebsart die an dem zweiten Ausgang des zweiten Choppers CH-I anliegenden Strom-Vergleichswerte I dem Eingang des Digital/Analog-Wandlers DAC zugeführt werden.

Entsprechendes gilt wiederum auch für die zweite Steuereinheit Bx.

Figur 4 zeigt beispielhaft ein Prinzipschaltbild der Einheit I-U zur Stromnachführung in der spannungsbasierten Betriebsart.

Die Einheit I-U umfasst einen ersten Schaltungsteil HkA für die Soll-Spulenstromwerte SQ sin für die erste Spule A (die am ersten Ausgang 1 des Sequenzers SQ gemäß Figur 3 anliegen) sowie einen zweiten Schaltungsteil HkB für die Soll-Spulenstromwerte SQ cos für die zweite Spule B (die am zweiten Ausgang 0 des Sequenzers SQ gemäß Figur 3 anliegen). Die beiden Schaltungsteile beinhalten jeweils die gleichen Komponenten.

Die Einheit I-U umfasst somit in dem ersten Schaltungsteil HkA einen ersten Zähler Z1, einen zweiten Zähler Z2, einen ersten Vergleicher V1, einen Detektor Dt zur Detektion des Messzeitpunktes für den Komparator Ka der ersten Steuereinheit Ax, ein erstes Halteregister H1, ein zweites Halteregister H2, ein drittes Halteregister H3 sowie einen Subtrahierer Sb.

Die Einheit I-U umfasst in dem zweiten Schaltungsteil HkB einen ersten Zähler Z1*, einen zweiten Zähler Z2*, einen ersten Vergleicher V1*, einen Detektor Dt* zur Detektion des Messzeitpunktes für den Komparator Kb der zweiten Steuereinheit Bx, ein erstes Halteregister H1*, ein zweites Halteregister H2*, ein drittes Halteregister H3* sowie einen Subtrahierer Sb*.

Die Einheit I-U umfasst ferner einen zweiten Vergleicher V2, einen ersten Multiplexer Mx1, einen zweiten Multiplexer Mx2, einen dritten Multiplexer Mx3, einen vierten Multiplexer Mx4, einen fünften Multiplexer Mx5, einen PI-Regler PI, einen Addierer A, einen ersten Multiplizierer M1, einen zweiten Multiplizierer M2 sowie ein logisches UND-Gatter U und ein logisches ODER-Gatter OR.

Den Takteingängen des ersten und zweiten Zählers Z1, Z2, Z1*,Z2* des ersten und zweiten Schaltungsteils HkA, HkB sowie einem Eingang des UND-Gatters U wird das (Chopper-) Taktsignal ChCI zugeführt.

Ein erster Eingang des ersten Vergleichers V1 des ersten Schaltungsteils HkA ist mit dem ersten Ausgang 1 des Sequenzers SQ gemäß Figur 3 verbunden. An diesem ersten Eingang liegen somit die sinus-Soll-Spulenstromwerte SQ sin des Sequenzers SQan.

Ein erster Eingang des ersten Vergleichers V1* des zweiten Schaltungsteils HkB ist mit dem zweiten Ausgang des Sequenzers SQ gemäß Figur 3 verbunden. An diesem ersten Eingang liegen somit die cosinus-Soll-Spulenstromwerte SQ cos des Sequenzers SQ an.

An dem zweiten Eingang des ersten Vergleichers V1 des ersten Schaltungsteils HkA sowie dem zweiten Eingang des ersten Vergleichers V1* des zweiten Schaltungsteils HkB liegt der Wert der mit Bezug auf Figur 2 erläuterten Stromschwelle S an. Diese wird auch einem ersten Eingang des zweiten Multiplizierers M2 zugeführt, an dessen zweitem Eingang der Sollstrom-Skalierfaktor Sk $I_{SOLL}$ anliegt.

Ein dem ersten Schaltungsteil HkA zugeführtes Signal HwA, das den Start einer sinus-Halbwelle des Soll-Spulenstroms anzeigt, wird einem Rücksetz-Eingang des ersten und zweiten Zählers Z1, Z2 sowie einem Takteingang des zweiten und dritten Halteregisters H2, H3 des ersten Schaltungsteils HkA zugeführt.

Ein dem zweiten Schaltungsteil HkB zugeführtes Signal HwB, das den Start einer cosinus-Halbwelle des Soll-Spulenstroms anzeigt, wird einem Rücksetz-Eingang des ersten und zweiten Zählers Z1*,Z2* sowie einem Takteingang des zweiten und dritten Halteregisters H2*, H3* des zweiten Schaltungsteils HkB zugeführt.

Der Ausgang des Komparators Ka der ersten Steuereinheit Ax gemäß Figur 3 liegt an einem Eingang des ersten Halteregisters H1 des ersten Schaltungsteils HkA an.

Der Ausgang des Komparators Kb der zweiten Steuereinheit Bx liegt an einem Eingang des ersten Halteregisters H1* des zweiten Schaltungsteils HkB an.

Das erste bzw. das zweite Ausgangssignal U(LA1), U(LA2) des ersten Choppers CH-U der ersten Steuereinheit Ax gemäß Figur 3 (siehe auch Figur 1(A) und 1(B)) ist mit einem ersten bzw. einem zweiten Eingang des Detektors Dt des ersten Schaltungsteils HkA verbunden.

Das erste bzw. das zweite Ausgangssignal U(LB1), U(LB2) des ersten Choppers CH-U der zweiten Steuereinheit Bx ist mit einem ersten bzw. einem zweiten Eingang des Detektors Dt* des zweiten Schaltungsteils HkB verbunden.

An einem ersten Eingang 1 des zweiten Vergleichers V2 sowie einem ersten Eingang 1 des zweiten Multiplexers Mx2 liegt ein Signal Sk SQ sin an, das die mit dem Sollstrom-Skalierfaktor Sk $I_{SOLL}$ multiplizierten sinus-Soll-Spulenstromwerte SQ sin darstellt, während einem zweiten Eingang 0 des zweiten Vergleichers V2 sowie einem zweiten Eingang 0 des zweiten Multiplexers Mx2 ein Signal Sk SQ cos zugeführt wird, das die mit dem Sollstrom-Skalierfaktor Sk $I_{SOLL}$ multiplizierten cosinus-Soll-Spulenstromwerte SQ cos darstellt.

Dem vierten und dem fünften Multiplexer Mx4, Mx5 wird ein Schaltsignal St zugeführt, das mit logischem "1"-Pegel einen Stillstand des Motors anzeigt und in diesem Fall den ersten Eingang 1 des vierten und des fünften Multiplexers Mx4, Mx5 an deren Ausgänge durchschaltet. Mit logischem "0"-Pegel zeigt das Schaltsignal St ein Drehen des Motors an und schaltet dann den zweiten Eingang 0 des vierten und des fünften Multiplexers Mx4, Mx5 an deren Ausgänge durch.

Das Signal St liegt außerdem an einem ersten Eingang des PI-Reglers PI zum Laden von dessen Startwerten sowie dem zweiten Eingang des UND-Gatters U an.

Der Ausgang des vierten Multiplexers Mx4, an dem die Spannungs-Vergleichswerte U für die spannungsbasierte Betriebsart anliegen, ist mit dem zweiten Eingang des zweiten Multiplexers Mx2A der ersten Steuereinheit Ax gemäß Figur 3 sowie dem zweiten Eingang des zweiten Multiplexers der zweiten Steuereinheit Bx verbunden und wird in der spannungsbasierten Betriebsart an den DAC Wandler DAC der ersten bzw. zweiten Steuereinheit Ax, Bx gemäß Figur 3 durchgeschaltet.

Am Ausgang des fünften Multiplexers Mx5 liegen die Spannungs-Korrekturwerte für die spannungsbasierte Betriebsart an, die vorzugsweise durch Multiplikation mit einem zugeführten Normierungsfaktors Nf mittels des ersten Multiplizierers M1 auf einen Bereich zwischen -1 und +1 normiert und gemäß Figur 3 als normierte Spannungs-Korrekturwerte SP dem ersten Eingang des Amplitudenreglers MAR zugeführt werden.

Die in Figur 4 gezeigte Einheit I-U dient dazu, in der spannungsbasierten Betriebsart im Stillstand des Motors zunächst die stärker bestromte Spule A, B des Motors auszuwählen. Dazu dient der zweite Vergleicher V2. Das entsprechende Selektionssignal Sel 1 am Ausgang des zweiten Vergleichers V2 bezeichnet denjenigen ersten bzw. zweiten Eingang 1 bzw. 0 des zweiten Vergleichers V2, an dem jeweils der höhere, wie oben beschrieben mit dem Sollstrom-Skalierfaktor Sk $I_{SOLL}$ multiplizierte sinus- oder cos-Soll-Spulenstromwert (d.h. Sk SQ sin bzw. Sk SQ cos) anliegt und schaltet diesen mittels des zweiten Multiplexers Mx2 an den ersten Eingang 1 des vierten Multiplexers Mx4 und bei logischem "1"-Pegel des Stillstandssignals St als Spannungs-Vergleichswert U der stärker bestromten Spule A bzw. B an dessen Ausgang.

Weiterhin wird im Stillstand des Motors mit dem am Ausgang des zweiten Vergleichers V2 anliegenden Selektionssignal Sel 1 das an dem ersten Eingang 1 des ersten Multiplexers Mx1 anliegende Ausgangssignal Ka H1 des ersten Halteregisters H1 des ersten Schaltungsteils HkA oder das an dem zweiten Eingang 0 des ersten Multiplexers Mx1 anliegende Ausgangssignal Kb H1* des ersten Halteregisters H1* des zweiten Schaltungsteils HkB an dessen Ausgang durchgeschaltet und somit das Ausgangssignal des Komparators Ka bzw. Kb ausgewählt, an dem das Stromsignal (d.h. der dadurch verursachte Spannungsabfall an $R_{S1}$, $R_{S2}$ gemäß Figur 3) der stärker bestromten Spule A, B anliegt.

Das Ausgangssignal am Ausgang des ersten Multiplexers Mx1, das das in dem betreffenden ersten Halteregister H1, H1* gespeicherte Ausgangssignal des Komparators Ka bzw. Kb darstellt und in Abhängigkeit davon, ob der an dem jeweiligen ersten Eingang des betreffenden Komparators Ka bzw. Kb anliegende Spannungsabfall an dem Messwiderstand $R_{S1}$ bzw. $R_{S2}$ größer oder kleiner ist als das Ausgangssignal des betreffenden Digital/Analog-Wandlers DAC, den logischen Wert "1" bzw. "0" hat, dient als Selektionssignal Sel 1 für den dritten Multiplexer Mx3, so dass entsprechend diesem Selektionssignal der erste Eingang 1 oder der zweite Eingang 0 des dritten Multiplexers Mx3 an dessen Ausgang geschaltet und dem Eingang des vierten Halteregisters H4 zugeführt wird. Dabei liegt an dem ersten Eingang 1 des dritten Multiplexers Mx3 der um den Wert "1" dekrementierte Ausgangswert des vierten Halteregisters H4 und an dem zweiten Eingang 0 des dritten Multiplexers Mx3 der um den Wert "1" inkrementierte Ausgangswert des vierten Halteregisters H4 an.

Dadurch wird also mit jedem (Chopper-) Taktsignal ChCl und bei Anliegen des logischen "1"-Pegels des Stillstandssignals St an dem UND-Gatter U das Ausgangssignal des vierten Halteregisters H4 um einen Wert "1" dekrementiert, wenn der an dem betreffenden ersten Eingang des Komparator Ka bzw. Kb anliegende Spannungsabfall $R_{S1}$ bzw. $R_{S2}$ größer ist als das Ausgangssignal des betreffenden Digital/Analog-Wandlers DAC, und um einen Wert "1" inkrementiert, wenn der Spannungsabfall $R_{S1}$ bzw. $R_{S2}$ kleiner ist als das Ausgangssignal des betreffenden Digital/Analog-Wandlers DAC.

Das Ausgangssignal des vierten Halteregisters H4, das an dem ersten Eingang 1 des fünften Multiplexers Mx5 anliegt, wird im Stillstand des Motors als Spannungs-Korrekturwert an dessen Ausgang durchgeschaltet, vorzugsweise mittels des ersten Multiplizierers M1 normiert und als normierter Spannungs-Korrekturwert SP ausgegeben.

Somit wird also im Stillstand des Motors der normierte Spannungs-Korrekturwert SP für die stärker bestromte Spule A, B dem ersten Eingang des Amplitudenreglers MAR zugeführt, so dass, wie oben erläutert wurde, durch die mit jedem (Chopper-) Taktsignal ChCl erfolgende Inkrementierung/Dekrementierung der tatsächliche, durch entsprechende Einstellung des effektiven Tastverhältnisses der angelegten PWM-Spannung erzielte Spulenstrom um den betreffenden Soll-Spulenstrom pendelt.

Bei Drehung des Motors in der spannungsbasierten Betriebsart (d.h. bei logischem "0"-Pegel des Stillstandssignals St) schaltet, wie bereits erwähnt wurde, das Schaltsignal St den zweiten Eingang 0 des vierten Multiplexers Mx4 an dessen Ausgang, so dass die zugeführte und mittels des zweiten Multiplizierers M2 und dem an diesem anliegenden Sollstrom-Skalierfaktor Sk $I_{SOLL}$ multiplizierte Stromschwelle S an dessen Ausgang durchgeschaltet und dem Digital/Analog-Wandler DAC als Spannungs-Vergleichswert U zugeführt wird.

Weiterhin wird bei Drehung des Motors in der spannungsbasierten Betriebsart der an dem zweiten Eingang 0 des fünften Multiplexers Mx5 anliegende Ausgang des PI-Reglers PI an den Ausgang des fünften Multiplexers Mx5 durchgeschaltet, durch die bevorzugte Multiplikation mit dem zugeführten Normierungsfaktors Nf mittels des ersten Multiplizierers M1 auf einen Bereich zwischen -1 und +1 normiert und als normierter Spannungs-Korrekturwert SP dem Amplitudenregler MAR zugeführt.

Das Eingangssignal des PI-Reglers PI wird mittels des ersten und des zweiten Schaltungsteils HkA, HkB erzeugt. Während jeder Halbwelle der sinus- bzw. cosinus-Soll-Spulenströme SQ sin, SQ cos werden damit die Anzahlen der Stromflussphasen (bzw. Chopper-Taktsinale ChCI) gezählt, in denen jeweils in der Spule A bzw. B einerseits der Soll-Spulenstromwert und andererseits der tatsächliche Spulenstromwert die festgelegte Stromschwelle S, wie es im Zusammenhang mit Figur 2 beschrieben wurde, erreicht und überschreitet.

Von diesen Sollwert- und Istwert-Anzahlen jeder Spule A, B wird dann jeweils die Differenz gebildet. Die beiden sich dadurch für die Spule A und B jeweils ergebenden Differenzen werden schließlich addiert, und die Summe dieser Differenzen wird als Regelabweichung an den PI-Regler PI angelegt.

Im einzelnen werden mit dem ersten Vergleicher V1, V1* des ersten bzw. zweiten Schaltungsteils HkA, HkB die Soll-Spulenstromwerte SQ sin bzw. SQ cos mit der festgelegten Stromschwelle S verglichen. Solange der jeweils aktuelle Soll-Spulenstromwert größer ist als die Stromschwelle S und somit ein logischer "1"-Pegel an dem Freigabe-Eingang E des Zählers Z1 bzw. Z1* anliegt, wird der Stand des ersten Zählers Z1 bzw. Z1* bei jedem Auftreten eines (Chopper-) Taktsignals CHCI um jeweils einen Wert "1" erhöht. Dieser Vergleich der unskalierten Soll-Spulenstromwerte SQ sin bzw. SQ cos mit der (unskalierten) Stromschwelle S bei Drehung des Motors wird gegenüber einem Vergleich der skalierten Soll-Spulenstromwerte Sk SQ sin, Sk SQ cos bevorzugt, da damit potenzielle Genauigkeitsverluste durch die Skalierung vermieden werden.

Ferner wird das den beiden Schaltungsteilen HkA, HkB zugeführte Ausgangssignal des Komparators Ka (für Spule A) bzw. des Komparators Kb (für die zweite Spule) in dem ersten Halteregister H1, H1* des ersten bzw. zweiten Schaltungsteils HkA, HkB zwischengespeichert. Mit dem Takten des ersten Halteregisters H1, H1* mittels eines von dem Detektor Dt, Dt* erzeugten Taktsignals tm(A); tm(B) wird der Inhalt des ersten Halteregisters H1, H1* an den Freigabe-Eingang E des zweiten Zählers Z2, Z2* angelegt. Solange der in dem ersten Halteregisters H1, H1* zwischengespeicherte Wert einen logischer "1"-Pegel aufweist, wird der Stand des zweiten Zählers Z2 bzw. Z2* bei jedem Auftreten eines (Chopper-) Taktsignals CHCI um jeweils einen Wert "1" erhöht und somit gezählt, wie oft innerhalb einer Halbwelle der tatsächliche Spulenstromwert in den beiden Spulen (der über den an den ersten Eingang (+) des Komparators Ka bzw. Kb angelegten Spannungsabfall an $R_{S1}$ bzw. $R_{S2}$ erfasst wird) jeweils die an dem zweiten Eingang des Komparators Ka bzw. Kb anliegende skalierte Stromschwelle (Sk $I_{SOLL}$ * S), die dem Digital/Analog-Wandler DAC als Spannungs-Vergleichswert U über den vierten Multiplexer Mx4 zugeführt wird, überschreitet.

Das von dem Detektor Dt, Dt* erzeugte Taktsignal tm(A); tm(B) bestimmt dabei den Messzeitpunkt, zu dem das Ausgangssignal des Komparators Ka; Kb zwischengespeichert und somit von dem zweiten Zähler Z2, Z2* erfasst wird. Dieses Taktsignal wird in Abhängigkeit von dem an dem Detektor Dt, Dt* anliegenden ersten und zweiten Ausgangssignal U(LA1), U(LA2); U(LB1), U(LB2) des ersten Choppers CH-U (siehe Figur 1(A) und 1(B) sowie Figur 3) sowie unter Berücksichtigung der BlankZeit so erzeugt, dass es im Wesentlichen zeitlich in der Mitte jeder Stromflussphase gemäß Figur 1(C) liegt.

Mit jedem, den Start einer (neuen) Halbwelle des Soll-Spulenstroms SQ sin bzw. SQ cos anzeigenden Signal HwA bzw. HwB wird der Stand des ersten Zählers Z1, Z1* dem zweiten Halteregister H2, H2* und der Stand des zweiten Zählers Z2, Z2* dem dritten Halteregister H3, H3* zugeführt. Ferner wird mit jedem Auftreten dieses Startsignals HwA, HwB der Stand des ersten und zweiten Zählers Z1, Z1*; Z2, Z2* auf 0 zurückgesetzt.

Weiterhin wird der Inhalt des zweiten und des dritten Halteregisters H2, H2*; H3, H3* ausgelesen und mittels des Subtrahierers Sb; Sb* voneinander subtrahiert. Die Differenz zwischen beiden stellt gemäß obiger Beschreibung im Zusammenhang mit Figur 2(A) ein Maß dafür dar, wie weit in der Spule A bzw. B der tatsächliche Spulenstrom von dem Soll-Spulenstrom abweicht.

Die am Ausgang des Subtrahierers Sb; Sb* und damit am Ausgang des ersten bzw. zweiten Schaltungsteils HkA, HkB anliegenden Regelabweichungen der ersten bzw. zweiten Spule A, B werden den Eingängen des Addierers A zugeführt, addiert und dem Eingang des PI-Reglers PI zugeführt, an dessen Ausgang dann ein der Regelabweichung entsprechender Spannungs-Korrekturwert anliegt, der wiederum dem zweiten Eingang 0 des fünften Multiplexers Mx5 zugeführt wird.

Als Startwert für die Drehung des Motors wird in den PI-Regler PI dann, wenn das Stillstandssignal St einen Motorstillstand (d.h. logischen "1"-Pegel) anzeigt, der Inhalt aus dem vierten Halteregister H4 geladen, um einen sprungfreien Übergang vom Stillstand zur Motordrehung zu gewährleisten. Wie bereits erwähnt wurde, wird bei Drehung des Motors der Ausgang des PI-Reglers PI schließlich über den fünften Multiplexer Mx5 (und den zweiten Ausgang der Einheit I-U) als normierter Spannungs-Korrekturwert SP für die spannungsbasierte Betriebsart dem Amplitudenregler MAR zugeführt.

Schließlich ist in Figur 4 noch eine logische ODER-Verknüpfung der beiden mit den Detektoren Dt, Dt* erzeugten Taktsignale tm(A); tm(B) mittels eines logischen ODER-Gatters OR angedeutet, dessen Ausgang mit einem weiteren Eingang des Amplitudenreglers MAR verbunden ist.

Figur 5 zeigt beispielhaft ein Prinzipschaltbild des nachgeführten Amplitudenreglers MAR.

Mit diesem Amplitudenregler wird der eingangs genannte, sich vorzugsweise aus zwei Komponenten zusammensetzende Skalierungsfaktor PWM_OFS + PWM_GRAD * $f_{STEP}$ erzeugt, mit dem (nach bevorzugter Addition zu dem normierten Spannungs-Korrekturwert SP) die von dem Sequenzer SQ abgegebenen Soll-Spulenstromwerte SQ sin und SQ cos skaliert werden, bevor diese mittels des Choppers CH-U in an die Spulen anzulegende PWM-Spannungen mit entsprechenden Tastverhältnissen umgewandelt werden, so dass die tatsächlichen Spulenströme zwar relativ grob, dafür aber ohne wesentliche Verzögerung, d.h. relativ schnell an eine aktuelle Motordrehzahl angepasst werden können, d.h. ohne Messung des tatsächlichen Spulenstroms gesteuert werden. Vorzugsweise wird die verbleibende Fehlanpassung durch die Addition des normierten Spannungs-Korrekturwertes SP, der mit der in Figur 4 gezeigten Einheit I-U zur Stromnachführung erzeugt wird, zu dem oben genannten Skalierungsfaktor zumindest weitgehend beseitigt.

Der Amplitudenregler umfasst einen Teiler T, einen Vergleicher V, einen ersten und einen zweiten Multiplexer Mx1, Mx2, ein erstes und ein zweites Halteregister H1, H2, ein Verzögerungsglied DI, ein erstes bis viertes logisches UND-Gatter U1, U2, U3, U4, einen ersten und eine zweiten Addierer A1, A2, einen ersten, einen zweiten und einen dritten Multiplizierer M1, M2, M3, einen Begrenzer Lmt, sowie eine Einheit N_R zum Ein- und Ausschalten der Nachregelung der geschwindigkeitsabhängigen Komponente PWM_GRAD des Skalierungsfaktors in Abhängigkeit von verschiedenen Kriterien.

Wie schon im Zusammenhang mit Figur 3 erläutert wurde, liegen an dem ersten Eingang des Amplitudenreglers MAR die an dem zweiten Ausgang der Einheit I-U (d.h. am Ausgang des dortigen ersten Multiplizierers M1) erzeugten normierten Spannungs-Korrekturwerte SP für die spannungsbasierte Betriebsart an. An dem zweiten Eingang des Amplitudenreglers MAR liegt der Sollstrom-Skalierfaktor Sk $I_{SOLL}$ für die Skalierung der Soll-Spulenstromwerte SQ sin, SQ cos (zum Beispiel zum Zwecke der Absenkung des Soll-Spulenstroms im Stillstand des Motors) an, während dem dritten Eingang das (Chopper-) Taktsignal ChCl zugeführt wird. An dem ersten Ausgang des Amplitudenreglers MAR wird der Skalierungsfaktor SSP erzeugt, der dem zweiten Eingang des ersten Multiplizierers M1A (M1B) gemäß Figur 3 zugeführt wird.

Weiterhin wird dem Amplitudenregler MAR die Schrittfrequenz $f_{STEP}$ für den Schrittmotor, das Stillstandssignal St, das an dem Ausgang des logischen ODER-Gatters OR gemäß Figur 4 anliegende Signal für Messzeitpunkte $t_M$, ein Initialwert Init PWM_GRAD, ein Initialwert Init PWM_OFS, ein Faktor $I_{SOLL}$ / $I_{COIL}$ für die Skalierung der Komponente PWM_OFS, ein erster Normierungsfaktor Nf PWM_OFS und ein zweiter Normierungsfaktor Nf PWM_GRAD, $f_{STEP}$ zugeführt.

Mit dem Amplitudenregler MAR wird an dem Ausgang des ersten Halteregisters H1 die für den Stillstand des Schrittmotors vorgesehene Komponente PWM_OFS des Skalierungsfaktors erzeugt und dann mittels des zweiten Multiplizierers M2 vorzugsweise mit dem genannten Faktor Sk $I_{SOLL}$ multipliziert sowie vorzugsweise mittels des ersten Normierungsfaktors Nf PWM_OFS auf einen Wertebereich zwischen 0 und 1 normiert.

Um im laufenden Betrieb des Motors eine verfeinerte Anpassung an ein aktuell erforderliches Drehmoment vorzunehmen, erfolgt dann mittels des dritten Multiplizierers M3 vorzugsweise noch eine Multiplikation mit dem Faktor $I_{SOLL}$ / $I_{COIL}$, der oben im Zusammenhang mit der Formel für den bevorzugten Skalierungsfaktor bereits erläutert wurde.

Weiterhin wird am Ausgang des zweiten Halteregisters H2 die zur Motordrehzahl proportionale Komponenten PWM_GRAD erzeugt, die mittels des ersten Multiplizieres M1 mit der Schrittfrequenz $f_{STEP}$ multipliziert und vorzugsweise mittels des zweiten Normierungsfaktors Nf PWM_GRAD, $f_{STEP}$ auf einen Wertebereich zwischen 0 und 1 normiert wird.

Der Ausgang des ersten Multiplizierers M1 und der Ausgang des dritten Multiplizierers M3 werden mittels des zweiten Addierers A2 addiert, so dass am Ausgang des zweiten Addierers A2 und somit an einem Eingang des ersten Addierers A1 der Skalierungsfaktor PWM_OFS * $I_{SOLL}/I_{COIL}$ + PWM_GRAD * $f_{STEP}$ anliegt.

Dieser modellbasierte Skalierungsfaktor wird mittels des ersten Addierers A1 zu dem normierten Spannungs-Korrekturwert SP am Ausgang der Einheit I-U addiert. Die Summe wird dann vorzugsweise mittels des Begrenzers Lmt auf einen Wertebereich zwischen 0 und 1 begrenzt und als Skalierungsfaktor SSP dem in Figur 3 gezeigten ersten Multiplizierer M1A der ersten Steuereinheit Ax zur Skalierung der Soll-Spulenstromwerte SQ sin für die erste Spule A sowie einem ersten Multiplizierer M1B (nicht dargestellt) der zweiten Steuereinheit Bx zur Skalierung der Soll-Spulenstromwerte SQ cos für die zweite Spule B zugeführt.

Nachfolgend soll die rekursive Erzeugung der Komponenten PWM_OFS und PWM_GRAD des Skalierungsfaktors SSP mittels des ersten Halteregisters H1 und des ersten Multiplexers Mx1 bzw. mittels des zweiten Halteregisters H2 und des zweiten Multiplexers Mx2 erläutert werden.

Zu diesem Zweck dient der von der Einheit I-U erzeugte normierte Spannungs-Korrekturwert SP, der auch an dem Vergleicher V anliegt. Der Vergleicher V weist drei Ausgänge A, B, C auf, an denen jeweils logische Schaltsignale für den ersten und den zweiten Multiplexer Mx1, Mx2 anliegen. Wenn die Spannungs-Korrekturwert SP größer als Null ist, wird an dem ersten Ausgang ein erstes Schaltsignal A erzeugt, wenn der Spannungs-Korrekturwert SP gleich Null ist, wird an dem zweiten Ausgang ein zweites Schaltsignal B erzeugt, und wenn der Spannungs-Korrekturwert SP kleiner als Null ist, wird an dem dritten Ausgang ein drittes Schaltsignal C erzeugt.

Diese Schaltsignale werden jeweils den entsprechenden drei Schalteingängen des ersten und des zweiten Multiplexers Mx1, Mx2 zugeführt, wobei das erste Schaltsignal A jeweils den ersten Eingang A, das zweite Schaltsignal B jeweils den zweiten Eingang B und das dritte Schaltsignal C jeweils den dritten Eingang C der Multiplexer Mx1, Mx2 an deren Ausgang durchschaltet.

Zur Erzeugung und Nachführung der Komponente PWM_OFS des Skalierungsfaktors wird der Initialwert Init PWM_OFS zunächst über einen ersten Eingang in das erste Halteregister H1 geladen. An einem zweiten Eingang des ersten Halteregisters H1 liegt der Ausgang des ersten Multiplexers Mx1 an.

Die drei Eingänge A, B, C des ersten Multiplexers Mx1 sind mit dem Ausgang des ersten Halteregisters H21 verbunden, wobei der dem ersten Eingang A zugeführte Ausgang des ersten Halteregisters H1 um ein Inkrement von "1" erhöht und der dem dritten Eingang C zugeführte Ausgang des ersten Halteregisters H1 um ein Inkrement von "1" vermindert wird. Der dem zweiten Eingang B zugeführte Ausgang des ersten Halteregisters H1 bleibt unverändert.

Somit wird also, wenn durch den Vergleicher V das erste Schaltsignal A erzeugt wird, der in dem ersten Halteregister H1 zwischengespeicherte Wert (d.h. entweder der Initialwert Init PWM_OFS oder ein momentaner Wert der Komponente PWM_OFS) um ein Inkrement "1" erhöht und über den Ausgang des ersten Multiplexers Mx1 wieder in das erste Halteregister H1 geladen.

Wenn durch den Vergleicher V das zweite Schaltsignal B erzeugt wird, wird der in dem ersten Halteregister H1 zwischengespeicherte Wert unverändert an den Ausgang des ersten Multiplexers M×1 und von dort wieder in das erste Halteregister H1 geladen.

Wenn schließlich durch den Vergleicher V das dritte Schaltsignal C erzeugt wird, wird der in dem ersten Halteregister H1 zwischengespeicherte Wert um ein Inkrement "1" vermindert und über den Ausgang des ersten Multiplexers Mx1 wieder in das erste Halteregister H1 geladen.

Die auf diese Weise vorgenommene Nachregelung der am Ausgang des ersten Halteregisters H1 anliegenden Komponente PWM_OFS wird jeweils dann ausgelöst, wenn am Takteingang des ersten Halteregisters H1 ein Signal anliegt. Dieses Signal wird mittels des Teilers T, des Verzögerungsgliedes DI, sowie des ersten und vierten UND-Gatters U1, U4 nur dann erzeugt, wenn einerseits das bevorzugt verzögerte Stillstandssignal St und andererseits sowohl das bevorzugt heruntergeteilte (Chopper-) Taktsignal ChCI, als auch das einen Messzeitpunkt anzeigende Signal $t_M$ jeweils positive logische Pegel ("1") aufweisen.

Mit der bevorzugten Teilung des (Chopper-) Taktsignals ChCI wird bewirkt, dass die Nachregelung der Komponente PWM_OFS nicht auf kurze Störungen wie z.B. Motorvibrationen reagiert. Andererseits ist es jedoch wünschenswert, dass die Nachregelung, insbesondere die erste Nachregelung des Initialwertes Init PWM_OFS, nicht zu viele Motorschritte (d.h. Chopper-Taktsignale ChCI) benötigt, da bei der ersten Nachregelung die Skalierung noch nahezu vollständig über den normierten Spannungs-Korrekturwert SP (d.h. den PI-Regler PI in der Einheit I-U) erfolgt. Die Komponente PWM_OFS sollte langsamer nachgeregelt werden als die Regelung des normierten Spannungs-Korrekturwertes SP durch den PI-Reglers PI, damit Regelschwingungen verhindert werden. Aus diesen Gründen hat sich ein Teilungsfaktor von zwischen etwa ½ (schnellste Nachregelung) und etwa 1/100 (langsamste Nachregelung) als vorteilhaft erwiesen, wobei der Teilungsfaktor auch in Abhängigkeit davon zu wählen ist, in welchem Umfang der Initialwert Init PWM_OFS nachgeregelt werden muss. In vielen Fällen ist ein Teilungsfaktor von etwa 1/8 besonders geeignet.

Mit der bevorzugten Verzögerung DI des Stillstandssignals St soll abgewartet werden, bis ein eventuelles Nachschwingen des Motors im ersten Moment des Stillstandes abgeklungen ist. Weiterhin soll damit abgewartet werden, bis sich der PI-Regler der Einheit I-U im eingeschwungenen Zustand befindet. Für typische Schrittmotoren mit einer Resonanzfrequenz im Bereich von 1/100s haben sich Verzögerungszeiten zwischen einigen 1/100s bis einigen 1/10s als vorteilhaft erwiesen.

In ähnlicher Weise wird zur Erzeugung und Nachführung der Komponente PWM_GRAD des Skalierungsfaktors zunächst der Initialwert Init PWM_GRAD über einen ersten Eingang in das zweite Halteregister H2 geladen. An einem zweiten Eingang des zweiten Halteregisters H2 liegt der Ausgang des zweiten Multiplexers Mx2 an.

Die drei Eingänge A, B, C des zweiten Multiplexers Mx2 sind wiederum mit dem Ausgang des zweiten Halteregisters H2 verbunden, wobei der dem ersten Eingang A zugeführte Ausgang des zweiten Halteregisters H2 um ein Inkrement von "1" erhöht und der dem dritten Eingang C zugeführte Ausgang des zweiten Halteregisters H2 um ein Inkrement von "1" vermindert wird. Der dem zweiten Eingang B zugeführte Ausgang des zweiten Halteregisters H2 bleibt unverändert.

Somit wird also, wenn durch den Vergleicher V das erste Schaltsignal A erzeugt wird, der in dem zweiten Halteregister H2 zwischengespeicherte Wert (d.h. entweder der Initialwert Init PWM_GRAD oder ein momentaner Wert der Komponente PWM_GRAD) um ein Inkrement "1" erhöht und über den Ausgang des zweiten Multiplexers Mx2 wieder in das zweite Halteregister H2 geladen.

Wenn durch den Vergleicher V das zweite Schaltsignal B erzeugt wird, wird der in dem zweiten Halteregister H2 zwischengespeicherte Wert unverändert an den Ausgang des zweiten Multiplexers Mx2 und von dort wieder in das zweite Halteregister H2 geladen.

Wenn schließlich durch den Vergleicher V das dritte Schaltsignal C erzeugt wird, wird der in dem zweiten Halteregister H2 zwischengespeicherte Wert um ein Inkrement "1" vermindert und über den Ausgang des zweiten Multiplexers Mx2 wieder in das zweite Halteregister H2 geladen.

Die auf diese Weise vorgenommene Nachregelung der am Ausgang des zweiten Halteregisters H2 anliegenden Komponente PWM_GRAD wird jeweils dann ausgelöst, wenn am Takteingang des zweiten Halteregisters H2 ein Signal anliegt. Dieses Signal wird mittels des Teilers T, des ersten bis dritten UND-Gatters U1, U2, U3 sowie der Einheit N_R nur dann erzeugt, wenn einerseits das Ausgangssignal der Einheit N_R und andererseits das invertierte Stillstandssignal St und sowohl das heruntergeteilte (Chopper-) Taktsignal ChCl, als auch das einen Messzeitpunkt anzeigende Signal t_M jeweils positive logische Pegel ("1") aufweisen.

Hinsichtlich der Teilung und des Teilungsfaktors des (Chopper-) Taktsignals ChCl gilt entsprechend das, was bereits oben im Zusammenhang mit der Komponente PWM_OFS erläutert wurde.

Anstelle der erläuterten Addition bzw. Subtraktion eines vorbestimmten Betrages zu bzw. von dem momentanen Wert der ersten bzw. zweiten Komponente PWM_OFS bzw. PWM_GRAD am Ausgang des ersten bzw. zweiten Halteregisters H1, H2 ist es auch möglich, dieser Komponenten durch Multiplikation mit vorbestimmten Faktoren zu vergrößern bzw. zu verkleinern.

Der Einheit N_R wird sowohl der am Ausgang des Amplitudenreglers MAR anliegende Skalierungsfaktor SSP, als auch die am Ausgang des dritten Multiplizierers M3 anliegende Komponente PWM_OFS zugeführt.

Diese beiden Eingangswerte werden mittels der Einheit N_R mit dort gespeicherten Kriterien für eine Nachregelung der Komponente PWM_GRAD verglichen. Ein solches Kriterium ist zum Beispiel dann erfüllt, wenn der anliegende momentane Skalierungsfaktor SSP kleiner ist als ein maximaler Wert von zum Beispiel 1.0 und größer ist als ein minimaler Wert, der sich durch Multiplikation der ebenfalls anliegenden Komponente PWM_OFS mit einem vorbestimmten Faktor ergibt. Wenn diese Voraussetzungen erfüllt sind, wird dem dritten UND-Gatter U3 ein Signal mit positivem logischen Pegel ("1") zugeführt, so dass die oben beschriebene rekursive Nachregelung der Komponente PWM_GRAD erfolgen kann. Die Einheit N_R kann zum Vergleich des Skalierungsfaktors SSP mit dem maximalen und dem minimalen Wert zwei Komparatoren aufweisen.

Durch diesen Vergleich mit einem maximalen und einem minimalen Wert wird sichergestellt, dass die Nachregelung im aktuellen Betriebszustand einen zur Erzielung einer stabilen Regelschleife hinreichend großen Einfluss auf die tatsächlich an den Motor angelegte effektive PWM-Spannung (d.h. deren Tastverhältnis) hat und damit über den PI-Regler der Einheit I-U eine Reaktion auf diese Anpassung erfolgen kann, so dass wiederum die Komponente PWM_GRAD auf einen Optimalwert eingeregelt werden kann.

Insgesamt werden somit die von dem PI-Regler der Einheit I-U erzeugten Spannungs-Korrekturwerte SP dazu verwendet, die Initialwerte der Komponenten Init PWM_OFS und Init PWM_GRAD, die mit den eingangs genannten Formeln berechnet oder auf andere Weise vorgegeben werden können, relativ schnell nachzuregeln, so dass die tatsächlichen Spulenströme ohne wesentliche Verzögerung an eine aktuelle Motordrehzahl angepasst werden können, d.h. ohne Messung des tatsächlichen Spulenstroms gesteuert werden.

Für diese Nachregelung sollte sich der Motor in einem geeigneten stabilen und ausgeregelten Arbeitspunkt befinden. Damit wird vermieden, dass fehlerhafte Modellparameter das Ergebnis dieser modellbasierten Nachregelung verschlechtern. Die Nachführung der Komponenten PWM_OFS und PWM_GRAD wiederum sollte in so kleinen Schritten erfolgen, dass die am Ausgang des ersten Addierers A1 anliegenden Skalierungsfaktoren SSP bei Parameteränderungen keinen Stromsprung verursachen.

Folgende Voraussetzungen sollten vor der Nachregelung der modellbasiert ermittelten Komponenten PWM_OFS und PWM_GRAD vorzugsweise erfüllt sein:

a.) Zum Einregeln des Motormodells sollte der Strom zumindest einmal im Stillstand auf einen noch messbaren Nennwert geregelt werden. Hierbei kann der Innenwiderstand des Motors R_COIL ermittelt werden. Dies ist möglich, sobald die Regelung einen stabilen Zustand erreicht hat. Damit kann dann PWM_OFS gemäß der eingangs genannten Formel berechnet und als Init PWM_OFS festgelegt werden.

Ferner sollte sich vor einer Korrektur von PWM_OFS der Motor längere Zeit im Stillstand befinden (hinreichend lang, bis mechanische Schwingungen abgeklungen sind). Als Strom sollte während dessen vorzugsweise der Laufstrom, nicht der meist deutlich niedrigere Haltestrom eingeprägt werden. Ein Abschluss der Korrektur von PWM_OFS ist beispielsweise durch Vergleich des Regelfehlers auf max. +/-1 Inkrement zu detektieren.

b.) Zur Ermittlung der Back-EMF-Konstante C_BEMF des Motors, die für die Berechnung von PWM_GRAD gemäß der eingangs genannten Formel erforderlich ist, ist ein Betrieb des Motors bei höherer Drehzahl erforderlich. Diese Drehzahl sollte Idealerweise so liegen, dass:

- der Skalierungsfaktor deutlich oberhalb des für Stillstand ermittelten Skalierungsfaktors liegt (z.B. Faktor 1,5 oder mehr), damit der Fehler bei der Ermittlung der Back-EMF-Konstante $C_{BEMF}$ aufgrund von Ungenauigkeiten nicht zu groß wird,
- der Soll-Spulenstrom $I_{SOLL}$ bei einem Skalierungsfaktor von weniger als 100% erreicht wird, da ein Skalierungsfaktor von 100% indiziert, dass der Soll-Spulenstrom nicht oder nur noch so gerade eben erreicht werden kann, und
- ein stabiler Zustand der Regelung bei erreichter Drehzahl erreicht wird.

Für die beschriebene Nachregelung der Komponenten PWM_OFS und PWM_GRAD ist dann zu beachten, dass vorzugsweise zunächst die Komponente PWM_OFS und dann die Komponente PWM_GRAD korrigiert werden sollte, da die Bestimmung der Komponente PWM_GRAD auf der korrekten Einstellung der Komponente PWM_OFS basiert.

Zur Optimierung der modellbasierten Nachregelung der Komponenten PWM_OFS und PWM_GRAD werden zum Einschaltzeitpunkt vorzugsweise Initialwerte Init PWM_OFS und Init PWM_GRAD für diese Komponenten geladen, die anhand des Spulenwiderstandes $R_{COIL}$ bzw. der Back-EMK-Konstante $C_{BEMF}$ gemäß der eingangs genannten Formeln ermittelt werden. Diese Initialwerte können, müssen aber nicht an eine konkrete Anwendung angepasst sein. Die Komponenten PWM_OFS und PWM_GRAD werden dann während des Motorbetriebes aufgrund des Regelfehlers, den der PI-Regler der Einheit I-U ermittelt, korrigiert bzw. entsprechend der aktuellen Verhältnisse wie oben beschrieben nachgeführt.

Eine erste Korrektur bzw. Ermittlung der Komponenten PWM_OFS und PWM_GRAD kann beispielsweise während der für Schrittmotorantriebe typischen Referenzfahrt, die dem normalen Betrieb vorausgeht, realisiert werden. Die Referenzfahrt erlaubt den Betrieb bei definierter Geschwindigkeit und einer niedrigeren Beschleunigung, da die Referenzfahrt meist nicht besonders zeitkritisch ist (einmalige Durchführung nach jedem Einschalten). Daher lässt die Referenzfahrt ein komplettes Nachregeln des Stromes über den PI-Regler der Einheit I-U zu, auch ohne dass die Komponenten PWM_OFS und PWM_GRAD bereits geeignet parametriert ist. Da die Referenzfahrt sowohl einen initialen, als auch einen abschließenden Stillstand und typisch eine Fahrt bei konstanter Drehzahl umfasst, können hierbei die Komponenten PWM_OFS und PWM_GRAD ermittelt werden. Dieses Verfahren ist vorteilhaft, da keine Parameter hinterlegt werden müssen und der Antrieb schon zum Startzeitpunkt auf Veränderungen der Komponenten reagieren kann.

**Patentansprüche**

1. Verfahren zum Betreiben eines Schrittmotors mit einem vorgegebenen Soll-Spulenstromverlauf, der sich aus einer Vielzahl von zeitlich aufeinander folgenden momentanen Soll-Spulenstromwerten (SQ sin, SQ cos) zusammensetzt, die durch Anlegen einer Spannung an mindestens eine der Motorspulen in diesen erzeugt werden, mit

   - einem ersten Schritt, mit dem ein Spannungs-Korrekturwert (SP) erzeugt wird, der eine Differenz zwischen einem momentanen Soll-Spulenstromwert und einem momentanen Ist-Spulenstromwert darstellt,
   - einem zweiten Schritt, mit dem ein Skalierungsfaktor (SSP) erzeugt wird, der aus einer mit dem Spannungs-Korrekturwert (SP) beaufschlagten Summe aus einer ersten, einem Stillstand des Motors zugeordneten Komponente (PWM_OFS) und einer zweiten, mit einer momentanen Schrittfrequenz ($f_{STEP}$) des Motors multiplizierten und einer Drehung des Motors zugeordneten Komponente (PWM_GRAD) gebildet wird, wobei die erste Komponente gemäß der Formel:

$$PWM\_OFS = R_{COIL} * I_{COIL} / V_M$$

und die zweite Komponente gemäß der Formel:

$$PWM\_GRAD = C_{BEMF} \, [Volt/ (rad/sec)] * 2\pi * 1\,Hz / (V_M * MSPR)$$

ermittelt wird, wobei die Parameter $R_{COIL}$ den Spulenwiderstand des Schrittmotors, $I_{COIL}$ den tatsächlichen Spulenstrom, $V_M$ die Motor-Versorgungsspannung, $C_{BEMF}$ die Gegen-EMK-Konstante des Schrittmotors in Volt pro Radian/Sekunde und MSPR die Anzahl der Mikroschritte je Umdrehung des Schrittmotors bezeichnen, und die Parameter entweder durch eine dem Betrieb des Schrittmotors vorangehende Referenzfahrt bestimmt oder vorbestimmte, für den betriebenen Schrittmotor typische Werte darstellen, sowie

- einem dritten Schritt, mit dem die momentanen Soll-Spulenstromwerte (SQ sin, SQ cos) mit dem Skalierungsfaktor (SSP) skaliert oder beaufschlagt werden.

2. Verfahren nach Anspruch 1,
bei dem im Stillstand des Motors die erste Komponente (PWM_OFS) und bei Drehung des Motors die zweite Komponente (PWM_GRAD), jeweils ausgehend von vorbestimmten Anfangswerten (Init PWM_OFS bzw. Init PWM_GRAD), in Abhängigkeit davon, ob der momentane Spannungs-Korrekturwert (SP) größer, gleich oder kleiner als Null ist, durch Addition bzw. Subtraktion eines vorbestimmten Betrages oder durch Multiplikation mit einem vorbestimmten Faktor vergrößert, unverändert beibehalten oder verkleinert wird.

3. Verfahren nach Anspruch 1,
bei dem im Stillstand des Motors der Spannungs-Korrekturwert (SP) durch einen Vergleich eines momentanen Ist-Spulenstromwertes der momentan am stärksten bestromten Motorspule mit dem Soll-Spulenstromwert dieser Spule ermittelt und erhöht wird, wenn die Differenz zwischen diesen Werten negativ ist, und vermindert wird, wenn die Differenz zwischen diesen Werten positiv ist.

4. Verfahren nach Anspruch 1,
bei dem beim Drehen des Motors der Spannungs-Korrekturwert (SP) dadurch ermittelt wird, dass während jeder Halbwelle des Soll-Spulenstroms jeder Motorspule eine vorbestimmte Stromschwelle (S) festgelegt wird, die nur während eines vorbestimmten Teils der Dauer der Halbwelle erreicht und überschritten werden soll, wobei in jeder Halbwelle die Anzahl derjenigen Stromflussphasen, in denen der Soll-Spulenstrom die Stromschwelle (S) erreicht und überschreitet, mit der Anzahl derjenigen Stromflussphasen verglichen wird, in denen der Ist-Spulenstrom die Stromschwelle (S) tatsächlich erreicht und überschreitet, und wobei die Differenz zwischen diesen Anzahlen von mindestens zwei Motorspulen addiert und als Regelabweichung einem Regler zur Erzeugung des Spannungs-Korrekturwertes (SP) zugeführt wird.

5. Verfahren nach Anspruch 1,
bei dem der erzeugte Spannungs-Korrekturwert (SP) auf einen Bereich zwischen -1 und +1 normiert wird.

6. Verfahren nach Anspruch 1,
bei dem ein momentaner Wert der ersten Komponente (PWM_OFS) nur dann verändert wird, wenn einerseits ein einen Stillstand des Motors anzeigendes Signal (St) und andererseits sowohl ein Taktsignal (ChCl), als auch ein einen Messzeitpunkt ($t_M$) für den Ist-Spulenstromwert anzeigendes Signal anliegt.

7. Verfahren nach Anspruch 6,
bei dem das einen Stillstand des Motors anzeigende Signal (St) verzögert wird, bis ein Nachschwingen des Motors nach Erreichen des Stillstands des Motors zumindest im Wesentlichen abgeklungen ist.

8. Verfahren nach Anspruch 1,
bei dem die erste Komponente (PWM_OFS) vor der Addition zu der zweiten Komponente (PWM_GRAD) mit dem Verhältnis zwischen einem momentanen Soll-Spulenstrom ($I_{SOLL}$) und einem Ist-Spulenstrom ($I_{COIL}$) multipliziert wird.

9. Verfahren nach Anspruch 1,
bei dem ein momentaner Wert der zweiten Komponente (PWM_GRAD) nur dann verändert wird, wenn ein invertiertes, einen Stillstand des Motors anzeigendes Signal (St) und sowohl ein Taktsignal (ChCl), als auch ein einen Messzeitpunkt ($t_M$) für den Ist-Spulenstromwert anzeigendes Signal anliegt.

10. Verfahren nach Anspruch 1, bei dem ein momentaner Wert der zweiten Komponente (PWM_GRAD) nur dann verändert wird, wenn ein momentaner Skalierungsfaktor (SSP) kleiner als ein vorbestimmter maximaler Wert und größer als ein minimaler Wert ist, der sich durch Multiplikation der momentanen ersten Komponente (PWM_OFS) mit einem vorbestimmten Faktor ergibt.

11. Schaltungsanordnung zum Betreiben eines Schrittmotors mit einem vorgegebenen Soll-Spulenstromverlauf, der sich aus einer Vielzahl von zeitlich aufeinander folgenden momentanen Soll-Spulenstromwerten (SQ sin, SQ cos) zusammensetzt, die durch Anlegen einer Spannung an mindestens eine der Motorspulen in diesen erzeugt werden, **dadurch gekennzeichnet, dass** die momentanen Soll-Spulenstromwerte (SQ sin, SQ cos) mit einem Skalierungsfaktor (SSP) beaufschlagt werden, der aus der Summe aus einer ersten, einem Stillstand des Motors zugeordneten Komponente (PWM_OFS) und einer zweiten, mit einer momentanen Schrittfrequenz ($f_{STEP}$) multiplizierten und einer Drehung des Motors zugeordneten Komponente (PWM_GRAD) gebildet wird, wobei die erste Komponente gemäß der Formel:

$$PWM\_OFS = R_{COIL} * I_{COIL} / V_M$$

und die zweite Komponente gemäß der Formel:

$$PWM\_GRAD = C_{BEMF} [Volt/ (rad/sec)] * 2\pi * 1\,Hz / (V_M * MSPR)$$

ermittelt wird, wobei die Parameter $R_{COIL}$ den Spulenwiderstand des Schrittmotors, $I_{COIL}$ den tatsächlichen Spulenstrom, $V_M$ die Motor-Versorgungsspannung, $C_{BEMF}$ die Gegen-EMK-Konstante des Schrittmotors in Volt pro Radian/Sekunde und MSPR die Anzahl der Mikroschritte je Umdrehung des Schrittmotors bezeichnen, mit

   - einem Amplitudenregler (MAR), dem ein eine Differenz zwischen einem momentanen Soll-Spulenstromwert und einem momentanen Ist-Spulenstromwert darstellender Spannungs-Korrekturwert (SP), ein eine Schrittfrequenz ($f_{STEP}$) des Motors anzeigendes Signal, sowie die ermittelte erste und zweite Komponente zugeführt werden, mit

     -- einem ersten Multiplizierer (M1) zur Multiplikation der zweiten Komponente (PWM_GRAD) mit dem die Schrittfrequenz ($f_{STEP}$) des Motors anzeigenden Signal,
     -- einem zweiten Addierer (A2) zur Addition der zweiten, mit dem die Schrittfrequenz ($f_{STEP}$) des Motors anzeigenden Signal multiplizierten Komponente zu der ersten Komponente (PWM_OFS), sowie
     -- einem ersten Addierer (A1) zur Addition des Spannungs-Korrekturwertes (SP) zu der Summe aus der ersten Komponente (PWM_OFS) und der zweiten, mit dem die Schrittfrequenz ($f_{STEP}$) des Motors anzeigenden Signal multiplizierten Komponente (PWM_GRAD), zur Erzeugung des Skalierungsfaktors (SSP).

12. Schaltungsanordnung nach Anspruch 11,
bei der der Amplitudenregler (MAR) aufweist:

     -- ein erstes Taktgesteuertes Halteregister (H1) zur Speicherung eines Momentanwertes der ersten Komponente (PWM_OFS), sowie einen ersten Multiplexer (Mx1), dessen Eingänge mit dem Ausgang des ersten Halteregisters (H1) und dessen Ausgang mit dem Eingang des ersten Halteregisters (H1) verbunden ist, zur rekursiven Erhöhung, Beibehaltung bzw. Verkleinerung des Wertes der ersten Komponente (PWM_OFS) in Abhängigkeit davon, ob der momentane Spannungs-Korrekturwert (SP) größer, gleich oder kleiner als Null ist, und
     -- ein zweites Taktgesteuertes Halteregister (H2) zur Speicherung eines Momentanwertes der zweiten Komponente (PWM_GRAD), sowie einen zweiten Multiplexer (Mx2), dessen Eingänge mit dem Ausgang des zweiten Halteregisters (H2) und dessen Ausgang mit dem Eingang des zweiten Halteregisters (H2) verbunden ist, zur rekursiven Erhöhung, Beibehaltung bzw. Verkleinerung des Wertes der zweiten Komponente (PWM_GRAD) in Abhängigkeit davon, ob der momentane Spannungs-Korrekturwert (SP) größer, gleich oder kleiner als Null ist.

13. Schaltungsanordnung nach Anspruch 12,
bei der der Amplitudenregler (MAR) einen Vergleicher (V) zum Vergleichen eines momentanen Spannungs-Korrekturwertes (SP) mit dem Wert Null und zum Erzeugen eines ersten, eines zweiten bzw. eines dritten logischen Schaltsignals (A, B, C) aufweist, wenn der momentane Spannungs-Korrekturwert (SP) größer als Null, gleich Null bzw. kleiner als Null ist, wobei die Schaltsignale (A, B, C) den Schalteingängen des ersten und des zweiten Multiplexers (Mx1, Mx2) zugeführt werden, um jeweils dessen ersten, zweiten bzw. dritten Eingang zum Ausgang durchzuschalten, zur rekursiven Erhöhung, Beibehaltung bzw. Verkleinerung des Wertes der ersten bzw. zweiten Komponente (PWM_OFS, PWM_GRAD) um einen vorbestimmten Betrag, mit dem jeweils das an dem ersten und dritten Eingang des ersten und des zweiten Multiplexers (Mx1, Mx2) anliegende Ausgangssignal des ersten bzw. zweiten Halteregisters (H1, H2) beaufschlagt wird.

14. Schaltungsanordnung nach Anspruch 12,
mit einem Teiler (T) zur Teilung eines zugeführten Chopper-Taktsignals (ChCl), einem Verzögerungsglied (DI) für das einen Stillstand des Motors anzeigende Signal (St), sowie einem ersten und einem vierten logischen UND-Gatter (U1, U4), wobei der Ausgang des Teilers (T) und ein einen Messzeitpunkt ($t_M$) für den Ist-Spulenstromwert anzeigendes Signal an den Eingängen des ersten UND-Gatters (U1) anliegen, ferner der Ausgang des Verzögerungsgliedes (DI) und der Ausgang des ersten UND-Gatters (U1) an den Eingängen des vierten UND-Gatters (U4) anliegen und der Ausgang des vierten UND-Gatters (U4) mit einem Takteingang des ersten Halteregisters (H1) verbunden ist.

15. Schaltungsanordnung nach Anspruch 12,
    mit einem Teiler (T) zur Teilung eines zugeführten Chopper-Taktsignals (ChCI), sowie einem ersten und einem zweiten logischen UND-Gatter (U1, U2), wobei der Ausgang des Teilers (T) und ein einen Messzeitpunkt ($t_M$) für den Ist-Spulenstromwert anzeigendes Signal an den Eingängen des ersten UND-Gatters (U1) anliegen und der Ausgang des ersten UND-Gatters (U1) und ein invertiertes, einen Stillstand des Motors anzeigendes Signal (St) an den Eingängen des zweiten UND-Gatters (U2) anliegen, dessen Ausgang mit einem Takteingang des zweiten Halteregisters (H2) verbunden ist.

16. Schaltungsanordnung nach Anspruch 15,
    mit einem dritten logischen UND-Gatter (U3) und einer Einheit (N_R) mit einem ersten Eingang, an dem ein momentaner Skalierungsfaktor (SSP) anliegt und einem zweiten Eingang, an dem die momentane erste Komponente (PWM_OFS) anliegt, sowie einem Ausgang, der mit einem ersten Eingang des dritten UND-Gatters (U3) verbunden ist, wobei an dem zweiten Eingang des dritten UND-Gatters (U3) der Ausgang des zweiten UND-Gatters (U2) anliegt, wobei die Einheit (N_R) nur dann einen logischen "1"-Pegel an ihrem Ausgang erzeugt, wenn der momentane Skalierungsfaktor (SSP) kleiner als ein vorbestimmter maximaler Wert und größer als ein minimaler Wert ist, der sich durch Multiplikation der momentanen ersten Komponente (PWM_OFS) mit einem vorbestimmten Faktor ergibt.

17. Schaltungsanordnung nach Anspruch 11,
    mit einem zweiten Multiplizierer (M2) zur Multiplikation der ersten Komponente (PWM_OFS) vor der Addition zu der zweiten Komponente (PWM_GRAD) mit einem Normierungsfaktor (Nf PWM_OFS).

18. Schaltungsanordnung nach Anspruch 11,
    mit einem dritten Multiplizierer (M3) zur Multiplikation der ersten Komponente (PWM_OFS) vor der Addition zu der zweiten Komponente (PWM_GRAD) mit dem Verhältnis zwischen einem momentanen Soll-Spulenstrom ($I_{SOLL}$) und einem Ist-Spulenstrom ($I_{COIL}$).


**Claims**

1. A method for operating a stepper motor having a specified coil current curve made up of a plurality of sequential instantaneous specified coil current values (SQ sin, SQ cos) generated in at least one of the motor coils by applying a voltage thereto, having

   - a first step, in which a voltage correction value (SP) is generated, indicating a difference between an instantaneous specified coil current value and an instantaneous actual coil current value,
   - a second step, in which a scaling factor (SSP) is generated by applying the voltage correction value (SP) to a sum of a first component (PWM_OFS) associated with the stopped motor and a second component (PWM_GRAD) multiplied by an instantaneous step frequency ($F_{STEP}$) of the motor and associated with the rotating motor, the first component being determined according to the formula:

$$PWM\_OFS = R_{COIL} * I_{COIL} / V_M$$

   and the second component being determined according to the formula:

$$PWM\_GRAD = C_{BEMF}\ [Volt/\ (rad/sec)] * 2\pi * 1\ Hz / (V_M * MSPR)$$

   where the parameter $R_{COIL}$ indicates the coil resistance of the stepper motor, $I_{COIL}$ indicates the actual coil current, $V_M$ indicates the motor supply voltage, $C_{BEMF}$ indicates the counter-EMF constant of the stepper motor in volts per radian/second, and MSPR indicates the quantity of microsteps per revolution of the stepper motor, and the parameters either are determined by a reference run preceding the operation of the stepper motor or are predetermined, typical values for the operated stepper motor, and

- a third step, in which the instantaneous specified coil current values (SQ sin, SQ cos) are scaled or applied with the scaling factor (SSP).

2. The method according to claim 1,
wherein the first component (PWM_OFS) for the stopped motor and the second component (PWM_GRAD) for the rotating motor, each starting from predetermined initial values (Init PWM_OFS and Init PWM_GRAD), are increased, remain unchanged, or are decreased by adding or subtracting a predetermined amount or by multiplying by a predetermined factor, depending on whether the instantaneous voltage correction value (SP) is greater than, equal to, or less than zero.

3. The method according to claim 1,
wherein the voltage correction value (SP) is determined when the motor is stopped by comparing an instantaneous actual coil current value of the motor coil having the greatest current at the time with the specified coil current value of said coil, and said correction value is increased if the difference between said values is negative, and is decreased if the difference between said values is positive.

4. The method according to claim 1,
wherein the voltage correction value (SP) for the rotating motor is determined in that a predetermined current threshold (S) is defined during each half-wave of the specified coil current of each motor coil and is to be reached and exceeded only during a predetermined part of the duration of the half-wave, wherein, in each half-wave, the quantity of those current flow phases in which the specified coil current reaches and exceeds the current threshold (S) is compared with the quantity of those current flow phases in which the actual coil current actually reaches and exceeds the current threshold (S), and wherein the difference between said quantities of at least two motor coils is added and fed to a controller as a control deviation for generating the voltage correction value (SP).

5. The method according to claim 1,
wherein the generated voltage correction value (SP) is normalized to a range between -1 and +1.

6. The method according to claim 1,
wherein an instantaneous value of the first component (PWM_OFS) is changed only if a signal (St) indicating a stopped motor is present and both a cycle signal (ChCl) and a signal indicating a measurement point in time ($t_M$) for the actual coil current value are present.

7. The method according to claim 6,
wherein the signal (St) indicating a stopped motor is delayed until post-pulse oscillation of the motor after the motor has stopped has at least substantially decayed.

8. The method according to claim 1,
wherein the first component (PWM_OFS) is multiplied by the ratio between an instantaneous specified coil current ($I_{SOLL}$) and an actual coil current ($I_{COIL}$) prior to adding to the second component (PWM_GRAD).

9. The method according to claim 1,
wherein an instantaneous value of the second component (PWM_GRAD) is changed only if an inverted signal (St) indicating a stopped motor is present and both a cycle signal (ChCl) and a signal indicating a measurement point in time ($t_M$) for the actual coil current value are present.

10. The method according to claim 1,
wherein an instantaneous value of the second component (PWM_GRAD) is changed only if an instantaneous scaling factor (SSP) is less than a predetermined maximum value and is greater than a minimum value determined by multiplying the instantaneous first component (PWM_OFS) by a predetermined factor.

11. A circuit arrangement for operating a stepper motor having a specified coil current curve made up of a plurality of sequential instantaneous specified coil current values (SQ sin, SQ cos) generated in at least one of the motor coils by applying a voltage thereto, **characterized in that** a scaling factor (SSP) is applied to the instantaneous specified coil current values (SQ sin, SQ cos) and is generated from the sum of a first component (PWM_OFS) associated with the stopped motor and a second component (PWM_GRAD) multiplied by an instantaneous step frequency ($F_{STEP}$) and associated with the rotating motor, the first component being determined according to the formula:

$$PWM\_OFS = R_{COIL} * I_{COIL} / V_M$$

and the second component being determined according to the formula:

$$PWM\_GRAD = C_{BEMF} [Volt/ (rad/sec)] * 2\pi * 1\ Hz / (V_M * MSPR)$$

where the parameter $R_{COIL}$ indicates the coil resistance of the stepper motor, $I_{COIL}$ indicates the actual coil current, $V_M$ indicates the motor supply voltage, $C_{BEMF}$ indicates the counter-EMF constant of the stepper motor in volts per radian/second, and MSPR indicates the quantity of microsteps per revolution of the stepper motor, where

- a voltage correction value (SP) indicating a difference between an instantaneous specified coil current value and an instantaneous actual coil current value, a signal indicating a step frequency ($F_{STEP}$) of the motor, and the determined first and second components are fed to an amplitude controller (MAR) having

-- a first multiplier (M1) for multiplying the second component (PWM_GRAD) by the signal indicating the step frequency ($F_{STEP}$) of the motor,
-- a second adder (A2) for adding the second component multiplied by the signal indicating the step frequency ($F_{STEP}$) of the motor to the first component (PWM_OFS), and
-- a first adder (A1) for adding the voltage correction value (SP) to the sum of the first component (PWM_OFS) and the second component (PWM_GRAD) multiplied by the signal indicating the step frequency ($F_{STEP}$) of the motor for generating the scaling factor (SSP).

12. The circuit arrangement according to claim 11,
wherein the amplitude controller (MAR) comprises:

-- a first cycle-controlled holding register (H1) for storing an instantaneous value of the first component (PWM_OFS) and a first multiplexer (Mx1), the inputs thereof being connected to the output of the first holding register (H1) and the output thereof being connected to the input of the first holding register (H1), for recursively increasing, maintaining, or decreasing the value of the first component (PWM_OFS) depending on whether the instantaneous voltage correction value (SP) is greater than, equal to, or less than zero, and
-- a second cycle-controlled holding register (H2) for storing an instantaneous value of the second component (PWM_GRAD) and a second multiplexer (Mx2), the inputs thereof being connected to the output of the second holding register (H2) and the output thereof being connected to the input of the second holding register (H2), for recursively increasing, maintaining, or decreasing the value of the second component (PWM_GRAD) depending on whether the instantaneous voltage correction value (SP) is greater than, equal to, or less than zero.

13. The circuit arrangement according to claim 12,
wherein the amplitude controller (MAR) comprises a comparator (V) for comparing an instantaneous voltage correction value (SP) to the value zero and for generating a first, a second, or a third logic signal (A, B, C) when the instantaneous voltage correction value (SP) is greater than zero, equal to zero, or less than zero, wherein the switch signals (A, B, C) are fed to the switched inputs of the first and second multiplexers (Mx1, Mx2) in order to connect the first, second, or third input thereof to the output, for recursively increasing, maintaining, or decreasing the value of the first or second component (PWM_OFS, PWM_GRAD) by a predetermined amount applied to the output signal of the first or second holding register (H1, H2) present at the first and third inputs of the first and the second multiplexer (Mx1, Mx2).

14. The circuit arrangement according to claim 12,
having a splitter (T) for splitting an infed chopper cycle signal (ChCl), a delay element (DI) for the signal (St) indicating a stopped motor, and a first and a fourth logical AND gate (U1, U4), wherein the output of the splitter (T) and a signal indicating a measurement point in time ($t_M$) for the actual coil current value are present at the inputs of the first AND gate (U1), and the output of the delay element (DI) and the output of the first AND gate (U1) are present at the inputs of the fourth AND gate (U4), and the output of the fourth AND gate (U4) is connected to a cycle input of the first holding register (H1).

15. The circuit arrangement according to claim 12,
having a splitter (T) for splitting an infed chopper cycle signal (ChCl) and a first and second logical AND gate (U1, U2), wherein the output of the splitter (T) and a signal indicating a measurement point in time ($t_M$) for the actual coil current value are present at the inputs of the first AND gate (U1), and the output of the first AND gate (U1) and an inverted signal (St) indicating the stopped motor are present at the inputs of the second AND gate (U2), and the output thereof being connected to a cycle input of the second holding register (H2).

16. The circuit arrangement according to claim 15,
having a third logical AND gate (U3) and a unit (N_R) having a first input at which an instantaneous scaling factor (SSP) is present and a second input at which the initial instantaneous component (PWM_OFS) is present, and an output connected to a first input of the third AND gate (U3), wherein the output of the second AND gate (U2) is present at the second input of the third AND gate (U3), wherein the unit (N_R) generates a logical "1" level at the output thereof only if the instantaneous scaling factor (SSP) is less than a predetermined maximum value and is greater than a minimum value determined by multiplying the instantaneous first component (PWM_OFS) by a predetermined factor.

17. The circuit arrangement according to claim 11,
having a second multiplier (M2) for multiplying the first component (PWM_OFS) by a normalizing factor (Nf PWM_OFS) prior to adding to the second component (PWM_GRAD).

18. The circuit arrangement according to claim 11,
having a third multiplier (M3) for multiplying the first component (PWM_OFS) by the ratio between an instantaneous specified coil current ($I_{SOLL}$) and an actual coil current ($I_{COIL}$) prior to adding to the second component (PWM_GRAD).

**Revendications**

1. Procédé pour exploiter un moteur pas à pas avec une courbe de courant de bobine nominal prédéterminée, qui se compose d'une pluralité de valeurs de courant de bobine nominales momentanées (SQ sin, SQ cos) se succédant dans le temps, qui sont générées dans les bobines de moteur par application d'une tension à au moins l'une de celles-ci, avec

- une première étape par laquelle est générée une valeur de correction de tension (SP) qui représente une différence entre une valeur de courant de bobine momentanée nominale et une valeur de courant de bobine momentanée réelle,
- une deuxième étape par laquelle est généré un facteur de mise à l'échelle (SSP) qui est formé à partir d'une somme à laquelle est appliquée la valeur de correction de tension (SP), d'une première composante (PWM_OFS) associée à un arrêt du moteur et d'une deuxième composante (PWM_GRAD) multipliée par une fréquence de pas momentanée ($F_{STEP}$) du moteur et associée à une rotation du moteur, la première composante étant déterminée selon la formule :

$$PWM\_OFS = R_{COIL} * I_{COIL} / V_M$$

et la deuxième composante étant déterminée selon la formule :

$$PWM\_GRAD = C_{BEMF} [Volt/ (rad/sec)] * 2\pi * 1\ Hz / (VM * MSPR)$$

dans lequel le paramètre $R_{COIL}$ désigne la résistance de la bobine du moteur pas à pas, $I_{COIL}$ le courant de bobine réel, $V_M$ la tension d'alimentation du moteur, $C_{BEMF}$ la constante de la force contre-électromotrice du moteur pas à pas en volts par radian/seconde et MSPR le nombre de micropas par tour du moteur pas à pas, et les paramètres étant soit déterminés par une marche de référence précédant l'exploitation du moteur pas à pas, soit représentent des valeurs prédéterminées typiques du moteur pas à pas utilisé, ainsi que
- une troisième étape par laquelle les valeurs de courant de bobine nominales momentanées (SQ sin, SQ cos) sont mises à l'échelle ou soumises au facteur de mise à l'échelle (SSP).

2. Procédé selon la revendication 1,
dans lequel, à l'arrêt du moteur, la première composante (PWM_OFS) et, lors de la rotation du moteur, la deuxième composante (PWM_GRAD) sont augmentées, maintenues inchangées ou réduites par addition ou soustraction d'une valeur prédéterminée ou par multiplication par un facteur prédéterminé, respectivement à partir de valeurs initiales prédéterminées (Init PWM_OFS ou Init PWM_GRAD), selon que la valeur de correction de tension momentanée (SP) est supérieure, égale ou inférieure à zéro.

3. Procédé selon la revendication 1, dans lequel, à l'arrêt du moteur, la valeur de correction de tension (SP) est déterminée par une comparaison d'une valeur de courant de bobine réelle momentanée de la bobine de moteur actuellement la plus fortement alimentée avec la valeur de courant de bobine nominale de cette bobine, et est augmentée si la différence entre ces valeurs est négative et est diminuée si la différence entre ces valeurs est positive.

4. Procédé selon la revendication 1, dans lequel, lors de la rotation du moteur, la valeur de correction de tension (SP) est déterminée par détermination, pendant chaque demi-onde du courant de bobine nominal de chaque bobine du moteur, d'un seuil de courant prédéterminé (S) qui doit être atteint et dépassé uniquement pendant une partie prédéterminée de la durée de la demi-onde, dans lequel, dans chaque demi-onde, le nombre des phases de conduction de courant, dans lesquelles le courant de bobine nominal atteint et dépasse le seuil de courant (S), est comparé au nombre des phases de conduction de courant dans lesquelles le courant de bobine réel atteint et dépasse effectivement le seuil de courant (S), et dans lequel la différence entre ces nombres d'au moins deux bobines de moteur est additionnée et délivrée en tant qu'écart de régulation à un régulateur pour la génération de la valeur de correction de tension (SP).

5. Procédé selon la revendication 1, dans lequel la valeur de correction de tension (SP) générée est normalisée dans une plage comprise entre -1 et +1.

6. Procédé selon la revendication 1, dans lequel une valeur momentanée de la première composante (PWM_OFS) n'est modifiée que si, d'une part, un signal (St) indiquant un arrêt du moteur et, d'autre part, aussi bien un signal de commande temporelle (ChCl) qu'un signal indiquant un instant de mesure ($t_M$) pour la valeur de courant de bobine réelle sont présents.

7. Procédé selon la revendication 6, dans lequel le signal (St) indiquant un arrêt du moteur est retardé jusqu'à ce qu'une oscillation après impulsion du moteur ait au moins sensiblement diminué après que le moteur se soit arrêté.

8. Procédé selon la revendication 1, dans lequel la première composante (PWM_OFS) est multipliée par le rapport entre un courant de bobine momentané nominal ($I_{SOLL}$) et un courant de bobine réel ($I_{COIL}$) avant l'addition avec la deuxième composante (PWM_GRAD).

9. Procédé selon la revendication 1, dans lequel une valeur momentanée de la deuxième composante (PWM_GRAD) n'est modifiée que si un signal (St) inversé, indiquant un arrêt du moteur, et aussi bien un signal de commande temporelle (ChCl) qu'un signal indiquant un instant de mesure ($t_M$) pour la valeur de courant de bobine réelle sont présents.

10. Procédé selon la revendication 1, dans lequel une valeur momentanée de la deuxième composante (PWM_GRAD) n'est modifiée que si un facteur de mise à l'échelle (SSP) momentané est inférieur à une valeur maximale prédéterminée et supérieur à une valeur minimale qui résulte de la multiplication de la première composante momentanée (PWM_OFS) par un facteur prédéterminé.

11. Agencement de circuit pour exploiter un moteur pas à pas avec une courbe de courant de bobine nominal prédéterminée, qui se compose d'une pluralité de valeurs de courant de bobine nominales momentanées (SQ sin, SQ cos) se succédant dans le temps, qui sont générées dans les bobines de moteur par application d'une tension à au moins l'une de celles-ci, **caractérisé en ce que** les valeurs de courant de bobine momentanées nominales (SQ sin, SQ cos) sont soumises à un facteur de mise à l'échelle (SSP) qui est formé à partir de la somme d'une première composante (PWM_OFS) associée à un arrêt du moteur et d'une deuxième composante (PWM_GRAD) multipliée par une fréquence de pas momentanée ($f_{STEP}$) et associée à une rotation du moteur, la première composante étant déterminée selon la formule :

$$PWM\_OFS = R_{COIL} * I_{COIL} / V_M$$

et la deuxième composante étant déterminée selon la formule :

$$PWM\_GRAD = C_{BEMF} [Volt/ (rad/sec)] * 2\pi * 1\ Hz / (VM * MSPR)$$

dans lequel le paramètre $R_{COIL}$ désigne la résistance de la bobine du moteur pas à pas, $I_{COIL}$ le courant de bobine réel, $V_M$ la tension d'alimentation du moteur, $C_{BEMF}$ la constante de la force contre-électromotrice du moteur pas à pas en volts par radian/seconde et MSPR le nombre de micropas par tour du moteur pas à pas, avec

- un régulateur d'amplitude (MAR) auquel sont délivrés une valeur de correction de tension (SP) représentant une différence entre une valeur de courant de bobine momentanée nominale et une valeur de courant de bobine momentanée réelle, un signal indiquant une fréquence de pas ($F_{STEP}$) du moteur ainsi que les première et deuxième composantes déterminées, avec

-- un premier multiplicateur (M1) pour la multiplication de la deuxième composante (PWM_GRAD) avec le signal indiquant la fréquence de pas ($f_{STEP}$) du moteur,
-- un deuxième additionneur (A2) pour l'addition de la deuxième composante multipliée par le signal indiquant la fréquence de pas ($f_{STEP}$) du moteur à la première composante (PWM_OFS), ainsi qu'
-- un premier additionneur (A1) pour l'addition de la valeur de correction de tension (SP) à la somme de la première composante (PWM_OFS) et de la deuxième composante (PWM_GRAD) multipliée par le signal indiquant la fréquence de pas ($f_{STEP}$) du moteur, pour générer le facteur de mise à l'échelle (SSP).

12. Agencement de circuit selon la revendication 11,
dans lequel le régulateur d'amplitude (MAR) présente :

-- un premier registre de maintien commandé par cadence (H1) pour stocker une valeur momentanée de la première composante (PWM_OFS), ainsi qu'un premier multiplexeur (Mx1), dont les entrées sont connectées à la sortie du premier registre de maintien (H1) et dont la sortie est connectée à l'entrée du premier registre de maintien (H1), pour augmenter, maintenir ou diminuer de manière récursive, respectivement, la valeur de la première composante (PWM_OFS) selon que la valeur de correction de tension momentanée (SP) est supérieure, égale ou inférieure à zéro, et
-- un deuxième registre de maintien commandé par cadence (H2) pour stocker une valeur momentanée de la deuxième composante (PWM_GRAD), ainsi qu'un deuxième multiplexeur (Mx2), dont les entrées sont connectées à la sortie du deuxième registre de maintien (H2) et dont la sortie est connectée à l'entrée du deuxième registre de maintien (H2), pour augmenter, maintenir ou diminuer de manière récursive, respectivement, la valeur de la deuxième composante (PWM_GRAD) selon que la valeur de correction de tension momentanée (SP) est supérieure, égale ou inférieure à zéro.

13. Agencement de circuit selon la revendication 12,
dans lequel le régulateur d'amplitude (MAR) comprend un comparateur (V) pour comparer une valeur de correction de tension (SP) momentanée avec la valeur zéro et pour générer un premier, un deuxième ou un troisième signal de commutation logique (A, B, C), respectivement, lorsque la valeur de correction de tension (SP) momentanée est supérieure à zéro, égale à zéro ou inférieure à zéro, respectivement, dans lequel les signaux de commutation (A, B, C) sont délivrés aux entrées de commutation du premier et du deuxième multiplexeurs (Mx1, Mx2) pour connecter en transfert, respectivement, sa première, sa deuxième ou sa troisième entrée vers la sortie, pour, respectivement, augmenter, maintenir ou diminuer de manière récursive la valeur de la première ou de la deuxième composante (PWM_OFS, PWM_GRAD) d'une valeur prédéterminée qui est appliquée au signal de sortie du premier ou du deuxième registre de maintien (H1, H2), respectivement, appliqué à la première et à la troisième entrées du premier et du deuxième multiplexeurs (Mx1, Mx2).

14. Agencement de circuit selon la revendication 12,
avec un diviseur (T) pour diviser un signal de commande temporelle hacheur (ChCl) délivré, un élément de retard (DI) pour le signal (St) indiquant un arrêt du moteur, ainsi qu'une première et une quatrième porte ET logique (U1, U4), dans lequel la sortie du diviseur (T) et un signal indiquant un instant de mesure ($t_M$) pour la valeur de courant de bobine réelle sont présents aux entrées de la première porte ET (U1), la sortie de l'élément de retard (DI) et la sortie de la première porte ET (U1) sont en outre présentes aux entrées de la quatrième porte ET (U4), et la sortie de la quatrième porte ET (U4) étant reliée à une entrée de signal d'horloge du premier registre de maintien (H1).

**15.** Agencement de circuit selon la revendication 12,
avec un diviseur (T) pour diviser un signal de commande temporelle hacheur (ChCl) délivré, ainsi qu'une première et une deuxième porte ET logique (U1, U2), dans lequel la sortie du diviseur (T) et un signal indiquant un instant de mesure ($t_M$) pour la valeur de courant de bobine réelle sont présents aux entrées de la première porte ET (U1) et la sortie de la première porte ET (U1) et un signal (St) inversé, indiquant un arrêt du moteur, sont présents aux entrées de la deuxième porte ET (U2), dont la sortie est reliée à une entrée de signal d'horloge du deuxième registre de maintien (H2).

**16.** Agencement de circuit selon la revendication 15,
avec une troisième porte ET logique (U3) et une unité (N_R) avec une première entrée à laquelle est appliqué un facteur de mise à l'échelle momentané (SSP) et une deuxième entrée à laquelle est appliquée la première composante momentanée (PWM_OFS), ainsi qu'une sortie qui est reliée à une première entrée de la troisième porte ET (U3), dans lequel la sortie de la deuxième porte ET (U2) est appliquée à la deuxième entrée de la troisième porte ET (U3), dans lequel l'unité (N_R) ne génère un niveau logique « 1 » à sa sortie que si le facteur de mise à l'échelle momentané (SSP) est inférieur à une valeur maximale prédéterminée et supérieur à une valeur minimale qui résulte de la multiplication de la première composante momentanée (PWM_OFS) par un facteur prédéterminé.

**17.** Agencement de circuit selon la revendication 11,
avec un deuxième multiplicateur (M2) pour multiplier la première composante (PWM_OFS), avant l'addition avec la deuxième composante (PWM_GRAD), par un facteur de normalisation (Nf PWM_OFS).

**18.** Agencement de circuit selon la revendication 11,
avec un troisième multiplicateur (M3) pour multiplier la première composante (PWM_OFS), avant l'addition avec la deuxième composante (PWM_GRAD), par le rapport entre un courant de bobine momentané nominal ($I_{SOLL}$) et un courant de bobine réel ($I_{COIL}$).

FIG. 1

(A)

**FIG. 2**

(B)

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015192831 A
- EP 2251972 A1